# EUROPEAN PATENT SPECIFICATION

(11) **EP 4 367 519 B1**
(45) Date of publication and mention of the grant of the patent: **02.09.2026**
(21) Application number: 22737984.9
(22) Date of filing: 08.07.2022
(51) Int. Cl.: G01N 35/10, G01N 35/00, G01N 35/04

(54) **SAMPLE EXTRACTOR**
PROBENEXTRAKTOR
EXTRACTEUR D'ÉCHANTILLONS

(30) Priority: 09.07.2021 GB 202109974
(43) Date of publication of application: 15.05.2024
(73) Proprietor: Randox Laboratories Ltd., Northern Ireland BT29 4QY (GB)
(72) Inventor: DAVIDSON, James, Crumlin, Northern Ireland BT29 4QY (GB); MCCONNELL, Ivan, Crumlin, Northern Ireland BT29 4QY (GB); FITZGERALD, Peter, Crumlin, Northern Ireland BT29 4QY (GB)
(74) Representative: Gill Jennings & Every LLP
(86) International application number: PCT/GB2022/051757
(87) International publication number: WO 2023/281268

(56) References cited:
- EP-A1- 1 589 344
- CN-A- 111 673 786
- US-A1- 2010 066 109
- US-A1- 2012 134 769
- US-A1- 2012 321 516
- US-A1- 2015 151 434
- US-A1- 2017 052 205
- US-A1- 2018 284 146
- MGI: "MGISTP-3000 Automated Sample Transfer Processing System", 7 June 2021 (2021-06-07), XP055901362, Retrieved from the Internet <URL:https://www.youtube.com/watch?v=rpWfMjkIxOE>
- MGI: "MGISTP-7000 High-throughput Automated Sample Transfer Processing System", 3 September 2020 (2020-09-03), XP055901375, Retrieved from the Internet <URL:https://www.youtube.com/watch?v=Cb9Mejq2zGA>
- MEGAROBO: "MegaRobo CDS-600-300 Series High Throughput Automated Sample Transfer Processing System", 6 July 2021 (2021-07-06), XP055901424, Retrieved from the Internet <URL:https://www.youtube.com/watch?v=FIETM8XBgFQ>
- ANONYMOUS: "Vision for Imagination MACHINE VISION PRODUCT CATALOG CONTENTS", 20 October 2020 (2020-10-20), pages 1 - 49, XP055901940, Retrieved from the Internet <URL:https://www.maxxvision.com/downloads/Cameras/Hikrobot_Catalog_MV.pdf> [retrieved on 20220316]
- ANONYMOUS: "Wayback Machine for Hikrobot_Catalog_MV.pdf", 20 October 2020 (2020-10-20), pages 1 - 3, XP055901947, Retrieved from the Internet <URL:https://web.archive.org/web/2020*/https://www.maxxvision.com/downloads/Cameras/Hikrobot_Catalog_MV.pdf> [retrieved on 20220316]

## Description

### FIELD OF THE INVENTION

The present disclosure relates to an assembly and method for extracting biological samples from sample tubes while minimising contamination and to corresponding grippers used to interact with sample tubes.

### BACKGROUND

One means for obtaining a biological sample from a patient is through use of a nasal and/or throat swab (also known as a nasopharyngeal swab). Such a swab can take the form of a narrow stick made of an elongate rod with a tip portion of an absorbing material such as cotton and/or bristles, or can be a moulded plastic (single piece) swab with a sample collection portion at one end.

After a swab has been used to collect a sample from a patient, the swab is placed inside a sterile container. The container may contain a universal transport medium or a viral transport medium, into which the tip portion is placed when placed inside the container.

The rod of the swab is often able to be broken into two parts by a user to allow the end of the swab with the absorbing material to fit inside the container. The container is then sealed once the used swab is placed inside.

Conventional sterile containers consist of a tube with a cap that is able to be screwed on and off a thread on the tube to respectively seal and unseal the tube. However, use of the cap also causes contamination risks when using manual or automated extraction processes and devices to prepare a sample for testing. This is because current automated extraction devices, and manual extraction processes, can be prone to contamination due to swabs becoming attached to the cap during transport. This causes a contamination risk because, on removal of the cap, the swab can be removed from the container with the cap or a portion of the swab can be left hanging outside of the sample tube.

US 2017/052205 A1 discloses an automated instrument for processing a sample. US 2018/284146 A1 discloses a method and automated apparatus for locating and selecting a colony of microorganisms on a culture dish. US 2012/321516 A1 discloses a decapping/recapping device for removing closures from sample tubes and for reclosing sample tubes with the same closures is presented. US 2010/066109 A1 discloses a container gripper provided with a position sensor. US 2015/151434 A1 discloses a robot hand and arm. CN 111673786 A discloses a mechanical gripper capable of rotating freely. In the YouTube video with the link https://www.youtube.com/watch?v=rpWfMjklxOE on the MGI-channel, an MGISTP-3000 Automated Sample Transfer Processing System is demonstrated, which includes automatic decapping of sample tubes and an "open lid detection".

Extraction processes commonly use pipette tips for sample transfer from a container to a test, processing or temporary storage location. In order to transfer a sample, a pipette tip end is typically placed inside a sample tube, at least a portion of the sample is obtained, and the pipette tip is removed from the tube. This also introduces a contamination risk because the swab can stick to pipette tips or highly viscous sample can stick to the outside of the pipette tip.

Each of these causes of contamination can lead to cross-contamination between samples or contamination of extraction equipment. This is an unacceptable risk when processing biological samples due to the chances of false results being created and voiding of samples. This is especially the case when samples are being tested to provide diagnostic results for disease, and even more when this is coupled with high throughput needs, such as in public health testing scenarios. Examples of this include mass processing of COVID-19 samples for diagnosis.

A means of significantly reducing contamination and contamination risks when extracting biological samples for testing is therefore needed.

### SUMMARY OF INVENTION

According to a first aspect, there is provided an apparatus for (i.e. suitable for) extracting a biological sample from a sample container, the apparatus comprising: a holder arranged in use to support a sample container; an extractor moveable in use between a first position disengaged from the container when the container is supported by the holder and a second position engaged with the container when the container is supported by the holder, the extractor being arranged in use to obtain matter from the container when in the second position; and an imager arranged in use to capture an image of the extractor at the first position when the extractor is moved from the second position to the first position and to identify, based on analysis of the captured image, when sample is present outside the container.

This provides an ability to automatically detect a potential source of contamination when it is caused and for that to be addressed before contamination is spread. This has a major effect on reducing contamination by avoiding further contamination and reducing risks of cross-contamination.

It is intended that "outside of the container" means at least partially outside of the container, typically as is visible within a field of view of the imager. Since, in some arrangements, the container or part thereof may not be in the field of view of the imager, the term "outside of the container" is intended to include occasions where sample is present (on the) outside of the extractor and anything which the extractor is holding or connected to in use that is in the field of view of the imager, such as a container cap or pipette tip. In arrangements where the container or part thereof is in the field of view of the imager, the term "outside of the container" is also intended to include occasions where sample is present outside of an opening of the container, such as projecting from the container, on a side of the container, or separate from the container.

The term "disengaged" can be thought of as meaning "unengaged from" or "not engaged with".

The extractor may be provided by a single component or device, but is typically provided by separate components, such as a gripper arranged in use to be able to pick up, hold, transport and/or let go of a sample container (and in some cases open and close the container) and a collector arranged in use to be able to obtain sample from a sample container. Each such component may operate separately or in conjunction with each other.

The container is typically supported in an upright (and fixed) position by the holder.

By the term "sample", it is intended that this includes all or part of a swab, which has typically been used to collect a sample from a patient, as well as including all or part of the biological sample collected from the patient and/or (viral) transport medium, liquid, solution, buffer or gel in which the sample is placed once placed in a sample container.

The apparatus may be arranged in use to issue an alert when sample (e.g. sample or at least part of a swab) is identified as being present outside the container. The alert may be issued at a user interface and/or by a speaker or sound emitting element.

It is intended the apparatus may carry out analysis of the captured image, such as the imager carrying out the analysis. This may be achieved by a further component of the apparatus, such as a processor or controller, carrying out analysis of the captured image.

The analysis may be any suitable analysis or image processing that allows sample present on the exterior of the collector. Typically the analysis of the captured image includes object detection.

While the object detection can be any suitable form of image processing, such as forms of edge detection, typically, the object detection includes contrast detection. This provides a simple means of detection of contamination while maintaining reliability of detection. Such a means is able to be reliable, at least in relation to any contamination, which will typically be a white or beige colour, and thereby providing a high contrast to most other colours, whether bright or dark.

The apparatus may further comprise a contrast surface facing the imager and located on an opposing side of the first position to the imager, the contrast surface typically being a uniform colour of a colour other than one or more of human respiratory mucus, transport buffer, the combination of human respiratory mucus and transport buffer, swab colour, such as white, beige, grey or blue. This improves reliability of the contrast detection by providing a uniform background against which to compare objects in the image instead of needing to compare to a background of fragmented colour. The colour of the contrast surface may be black. Typically, the contrast surface is located in a field of view of the imager.

When in the second position, the extractor may arranged in use to obtain matter from an interior of the container when the container is supported by the holder. This allows identification of sample outside of the container by analysis of an image obtained/captured by the imager. In this situation, this may be sample outside of the container following matter having been obtained from the interior of the container, such as, as a result of matter being obtained from the interior of the container.

When the extractor obtains matter from the interior of the container, the matter may include (at least a portion of a) sample). This allows extraction of sample from within the container. When the extractor is obtaining matter from the interior of the container, the container may have been provided to the holder open, or may have been opened when in the holder, either by the extractor, a component or element of the extractor or by a separate component.

The extractor may include a collector, the collector being moveable in use between the first position and second position, the first position being a position outside the container when the container is supported by the holder and the second position being a position inside the container when the container is supported by the holder, and wherein the matter obtained from the container may be at least a portion of a sample, the collector thereby being arranged in use to obtain at least a portion of a sample from the container when in the second position.

In other words, this may mean the first aspect provides an apparatus for extracting a biological sample from a sample container, the apparatus comprising: a holder arranged in use to support a sample container; a collector moveable in use between a first position outside the container when the container is supported by the holder and a second position inside the container when the container is supported by the holder, the collector being arranged in use to obtain at least a portion of a sample from the container when in the second position; and an imager arranged in use to capture an image of the collector at the first position when the collector is moved from the second position to the first position and to identify, based on analysis of the captured image, when sample is present on an exterior of the collector.

This allows specific detection of presence of sample outside of the container when a collector is used. Due to the collector typically being used to move sample within the apparatus outside of a container, this presents a significant risk of contamination occurring. As such, identifying sample outside of the container, such as on an exterior of the collector, when a collector is used, provides an opportunity to avoid and reduce contamination being spread within the apparatus.

When a collector is present, the apparatus may be arranged in use to issue an alert when sample (e.g. sample or at least part of a swab) is identified as being present on an exterior of the collector.

The collector may only be moveable between the first position and second position in order to allow sample to be obtained. Typically, the collector is (also) moveable between the first position and a third position and is arranged in use to move to the third position after the at least a portion of the sample is obtained, the third position being laterally offset from the first position. This allows the obtained sample to be moved away from the container reducing contamination risk of components at the container while any further processing is carried out on the sample.

The apparatus may further comprise a sample plate locatable in use at the third position, the collector being arranged in use to dispense the obtained sample on to the sample plate when at the third position. While the obtained sample could continue to be held by the collector when at the third position, by dispensing the sample, this allows the collector to proceed to conduct other actions. Additionally, since the sample plate is locatable in use at the third position (and thereby able to be located elsewhere as well), this allows further transport of the sample if needed.

The sample plate may have a plurality of sample wells, the obtained sample being dispensed into (only) one sample well when dispensed on to the sample plate. This allows a plurality of samples to be dispensed on to the sample plate in order to batch samples or to maintain samples in a batch. If sufficient obtained sample is available, it would of course be possible to dispense obtained sample into a plurality of wells, which would expand the options for later processing to be conducted on the sample.

The collector is typically arranged in use to retain liquid, such as a medium (including a universal transport medium or viral transport medium), solvent or wash to which a sample in the container is exposed in order to allow sample to pass into a liquid.

The collector may have an in-built means of obtaining sample, such as a recess or reservoir, but typically, the collector further comprises a removably attachable vessel, the collector being arranged in use to pass liquid into the vessel to obtain the at least a portion of the sample when in the second position. This reduces the risk of contamination between sample obtaining events (such as from different samples) because different vessels can be used for each different sample obtaining event.

While the collector may be attachable to multiple vessels at any one time, so as to allow multiple different samples to be obtained, typically the collector is only attachable to a single vessel at any one time. This limits the collector to only being able to obtain a single sample per sample collection event. This reduces the risk of cross contamination between samples when a sample is being removed from a container.

The vessel may be a disposable tip, such as a pipette tip. Since the collector may include a vessel, such as a pipette tip or other such disposable tip, the analysis of the captured image to identify if sample is present on an exterior of the collector typically includes analysis to identify if sample is present on an exterior of the vessel or pipette tip.

The collector may include any suitable means of drawing liquid into it, such as into a vessel, in order to obtain sample. This may include a pipettor, pump, liquid handling robot or other form of automated pipetting system. The collector typically may include an aspirator however.

When a vessel, such as a disposable tip, is to be used, the vessel is removably attachable to the aspirator in use. As part of movement of the collector, the aspirator may be moveable in use to move at least a portion of the vessel to the second position to move a sample collection portion of the vessel, such as an aperture of the tip, into the container to allow aspiration of sample from the container into the vessel.

A vessel may be removable from the collector manually by a user after sample has been dispensed at the third position. Typically however, the collector is moveable between the third position and a fourth position, the collector being arranged in use to deposit the vessel at the fourth position. This reduces the need for user intervention and places the used vessel in a specific location, each of which further reduces contamination risk. Removal of the vessel from the collector may be achieved in a conventional manner, such as by known means for removing a pipette tip from an automated aspirator.

The fourth position may be a waste container. This may be a waste bin or a tip plate into which a plurality of vessels are able to be placed after use (i.e. after they have been used to collect and dispense sample).

A vessel may be attachable to a collector manually by a user before a sample is obtained from the container, though typically, the collector is moveable between a selection position and the first position, the collector being arranged in use to attach to a vessel located at the selection position. As with removal of the vessel from the collector, this reduces the need for user intervention.

Attachment of a vessel to the collector may be achieved in a conventional manner, such as by a push-fit arrangement where an interference fit is establishable between a vessel and the collector. This may be achieved by known means of attaching a pipette tip to an automated aspirator.

The collector may be moveable between the fourth position and the selection position. This allows the collector to carry out repeated cycles of connecting with a vessel, drawing sample into the vessel, dispensing the obtained sample and depositing the vessel without user interaction. This means multiple samples can be obtained, such as from a batch of containers without user interaction being needed. As such, contamination risk is reduced.

The collector may be moveable in any suitable direction and between any suitable locations. Typically, the collector is moveable along a path between the first, third, fourth and selection positions, and, based on the relative locations of the said positions, at least portions of the path over which the collector is travelling from one of said positions to another of said positions are a self-avoiding walk. In other words, movement of the controller between and within positions may exclude movement over any position other than the position the controller is currently located over or which is a position other than the position from which or to which the controller is moving.

This avoids the collector travelling over any one of said positions when moving between any two other positions reducing contamination risk, for example, from a drip of sample falling on to one position (such as the selection position) when the collector is moving between the first and third positions or third and fourth positions.

When travelling within any one position, as long as that movement does not move the controller to another position, the path the collector moves along may intersect with itself. However, when on the self-avoiding walk, such as when the collector is travelling from one position to the next, the collector typically does not pass over any other positions, and therefore typically travels directly from one position to the next. Additionally, due to the self-avoiding walk, there are typically no intersections of the path with itself when travelling from one of said positions to another of said positions along the path.

The first, third, fourth and selection positions can be arranged in any arrangement that allows movement of the collector therebetween. This can include a stacked arrangement, such that the positions are vertically aligned and overlap with each other. Typically however, the first, third, fourth and selection positions are laterally offset relative to each other. This allows a two-dimensional mechanism to be used to move the collector between the first, third, fourth and selection positions, which simplifies the components required to allow the movement to be achieved and reduces contamination risks that would otherwise be increased due to any changes in vertical elevation of the collector.

When in the second position, the extractor may be arranged in use to obtain a cap from the container when the container is supported by the holder, the matter obtained from the container thereby including the cap of the container, and the imager is arranged in use to identify, based on analysis of the captured image, when sample is present outside the container when the cap has been obtained from the container by the extractor. The cap may be any form of seal or closure provided on an opening of a container. It is intended that an apparatus according to a first aspect obtaining matter from the container may include removal, opening or breaking of such a seal regardless of whether material is physically removed from the container by this process. In such a situation, the matter obtained could be seen to be obtaining an open container.

Opening the container, such as by removal of the cap, and identifying if sample is present outside the container when the container has been opened allows identification of sample adhering to the cap, seal or closure; to components used to open the container; projecting from the container (such as when a swab projects from the container) or on an outside of the container. Sample being present outside the container in this manner presents a serious contamination risk because the container, cap, seal or closure is often not placed in a waste location, but continues to be held within and moved around the analyser, increasing the risk of contamination, potentially more so than if sample were present on a pipette tip that is disposed of (securely) after a single use.

In order to achieve the cap, seal or closure being obtained from the container, when in the second position, the extractor may be arranged in use to engage the cap of the container when the container is supported by the holder. Other mechanisms may be able to be used, but typically some form of engagement is provided to allow the removal. This allows for a simple removal mechanism to be used.

The extractor may include a first gripper and the matter obtained from the container is a cap of the container, the first position being a position in which there is a separation between the first gripper and the container when the container is supported by the holder and the second position being a position in which the first gripper is in clamped to the cap of the container when the container is supported by the holder.

The first gripper may be able to be clamped to the cap by being arranged in use to grip the cap of the container, and wherein the holder is arranged in use to maintain the orientation of the container when supported by the holder and the first gripper being rotatable in use, the first gripper thereby being arranged in use to remove the cap, the matter obtained in use from the container thereby being the cap. In other words, the apparatus may further comprise a first gripper arranged in use to grip a cap of the container. In order to obtain sample from the container such a cap typically needs to be removed. It is possible to rotate the container while holding the cap in position in order to remove the cap. Typically however, the holder is arranged in use to maintain the orientation of the container when supported by the holder and the first gripper being rotatable (and moveable) in use, the first gripper thereby being arranged in use to remove the cap. This reduces the footprint of the holder by allowing the mechanism used to remove the cap to be above the container, which reduces the amount of lateral space needed thereby minimising the footprint of the apparatus.

There may be a plurality of first grippers. This allows the functionality of the first gripper as set out above and below to be carried out by multiple grippers.

The imager may be arranged in use to capture an image of the container and cap when the cap has been removed from the container and to identify, based on analysis of the captured image, when sample is present outside of the container. This may be due to sample being present on the cap or extending out of the container. This may of course include the swab being present on the cap or extending out of the container. By identifying this, action is able to be taken when this does occur, thereby reducing the likelihood of contamination.

As set out above, the apparatus may be arranged in use to issue an alert when sample (e.g. sample or at least part of a swab) is identified as being present outside the container. This may be achieved as set out above.

The container may simply be discarded after sample is obtained by the collector. Typically however, the first gripper is arranged in use to replace the cap on the container after sample has been obtained from the container by the collector. This allows the container to be re-sealed after sample is obtained to allow further sample to be collected from the container at another time if needed. Additionally, the replacement cap is typically the same cap as was removed. This reduces the amount of space required by the apparatus since a store of new caps is not required, and neither is a store for used caps. This helps reduce the overall size of the apparatus.

The cap may be held above the container once removed, or held in another position. Typically, the first gripper is moveable in use between the position in which the container is supported by the holder and holding position along a first path (and may be arranged in use to transport the cap to the holding position between removal of the cap from the container and replacement of the cap on the container). This moves the cap to a safe location where it will not interfere with sample collection, further reducing the likelihood of contamination occurring.

Additionally, in such a case, the apparatus may further comprise a channel aligned with the first path, the channel being suitable for holding liquid. This means that, in the event of a drip falling from the cap during transportation to the holding position, any drip is contained within this channel. This isolates the drip so that it cannot contaminate other parts of the apparatus.

The holder may be arranged in use to support a plurality of containers. This allows the apparatus to be used to obtain sample from multiple containers, thereby increasing the throughput capability of the apparatus.

While the holder may support any number of samples at any one time, typically, the holder is arranged in use to only support a single container at any one time. This limits the number of containers able to be open and having sample obtained therefrom at any one time to only one. This reduces the possibility of contamination between samples during the time sample is being obtained from a container.

The holder is typically arranged in use to release each container after the sample has been obtained from the container, each container being moveable between the holder and a tube rack on release from the holder. This allows the single container supported by the holder to be exchanged with a further container.

The use of a tube rack also allows multiple containers to be stored within the apparatus. By the apparatus further comprising a tube rack as it may do, this limits contamination since all the containers to be processed by the apparatus at any one occasion are within the apparatus, allowing the apparatus to be sealed during extraction of samples from the containers, reducing the chances of contamination from a source external to the apparatus.

The apparatus may further comprise a second gripper arranged in use to hold a container and to be moveable between the tube rack and the holder. This reduces user interaction with the apparatus by automating the movement of containers between the holder and tube rack, which reduces the possibility of contamination.

There may be a plurality of second grippers. This allows the functionality of the second gripper as set out above and below to be carried out by multiple grippers.

The second gripper may have at least two jaws, at least one of the at least two jaws being moveable towards and away from each other jaw, the at least two jaws having at least three teeth with each jaw having at least one of the at least three teeth, the teeth being positioned so as to form a pitch circle at a first separation of the jaws. This allows containers of different sizes (such as different diameters) to be held by the second gripper due to the arrangement on the pitch circle providing at least three points of contact between the second gripper and a container being held.

The second gripper may have three or more jaws. Typically however, there are only two jaws. Each jaw may have at least two teeth. The teeth may each be located at an edge proximal each other jaw. Each jaw may be moveable towards or away from each other jaw, this is intended to include being moveable towards or away from a common point.

While typically the teeth have a (lateral) separation therebetween, there may be no separation between two or more teeth, such as by being formed as part of the same piece of material or projection. This is possible as long as at least one part of each tooth is able to form part of the pitch circle.

When there are two jaws, typically, the minimum diameter of container the second gripper is able to hold is set by (i.e. determined by) the smallest distance between any two teeth on any one jaw when those teeth are separated by an axis along which one of the jaws is moveable. When applying this, to be able to be held by the second gripper, this smallest distance must be less than the outer diameter of the part of the container to be held.

The teeth may each be shaped so as to be suitable for providing contact between the second gripper and container to allow the second gripper to hold each container. The teeth each may have a taper on a radially outer side of each of the teeth tapering at a tip of the each of the teeth tapering the tip radially inwardly.

This allows the teeth to push between adjacent containers in a tube rack when being lowered to pick up a container. This ability to push between adjacent containers reduces the likelihood of a tooth catching on or crashing into a container other than the container that is being picked up, which would otherwise prohibit the second gripper picking up the desired container from the tube rack.

The teeth of each jaw may each have a first portion and a second portion, a radially inner side of each first portion being radially inward of the respective (radially inner side of each) second portion, each first portion being located at a tip of the respective jaw and being arranged in use to contact the container when the second gripper is in use. This allows the container to be gripped without needing to grip or be in contact with the cap of the container. This provides more secure contact between the second gripper and container reducing the likelihood of a container slipping out of the second gripper in used. This is achieved by the second potions being set back radially relative to the first portions to create a cavity. This allows the cap of the container, which typically has a larger diameter than the container and is usually made from a material with a lower coefficient of friction than the rest of the container, to be located in the cavity when the second gripper is holding a container. Additionally, since different types of container have different size caps, this extends the ability for the second gripper to hold multiple container types.

There may be a taper between each first and respective second portion providing an inclined transition between the radial positions of the respective portions. This reduces the likelihood of a container latching on to or catching on a jaw when the second gripper releases a container.

The tube rack may be located on a level surface. Typically however, a surface on which the tube rack is located is tilted, wherein the tilt is preferably 2.3 degrees (°) relative to horizontal. By tilting the surface on which the tube rack is located, a more uniform presentation of containers (of different types) within the tube rack is achieved. This is due to the tilt providing a bias (due to gravity) encouraging the tubes to fall to one side of the tube rack, which enhances the ability of the second gripper to repeatably and accurately take hold of each container.

The tilt may be achieved through any suitable means, such as tilting an internal surface or section of the apparatus. Typically though, the apparatus itself is tilted with one vertex at the base of the apparatus, so an edge or corner of the apparatus, being elevated above an opposing vertex on the base of the aperture. This avoids the manufacture process of the apparatus needing to implement an internal tilt in the apparatus, thereby simplifying the manufacture process when incorporating this feature.

While the first and second grippers may be separate grippers, typically the first gripper and the second gripper are the same gripper. This reduces component count and limits the number of components that come into contact with each container.

There may be a plurality of grippers. This allows the functionality of the gripper as set out above and below to be carried out by multiple grippers.

A portion of the gripper is arranged in use to provide contact between the gripper and a container held by the gripper (such as the first section detailed above) may have any suitable texture. Typically, a portion of the gripper is arranged in use to provide contact between the gripper and a container held by the gripper may have a plurality of inwardly oriented projections the projections forming a pitch circle. This allows contact to be made on between the gripper and container or container cap at a plurality of points improving the grip of the gripper. Of course, when this gripper is the second gripper, the portion may be the first portions of each tooth. Additionally or alternatively, the projections may be splines.

The apparatus may further comprise a further imager arranged in use, based on orientation and positioning of the further imager, to capture a further image of a deck of the apparatus, and to identify, based on analysis of the further captured image, whether consumables on the deck are located in an expected position (and orientation). This allows a user to run the analyser or to be prompted to load one or more missing consumables and/or correct an orientation of a consumable. This reduces the risk of contamination and improves use efficiency of the apparatus.

This may be achieved by processing the further captured image using object detection, edge detection, contrast detection or any other suitable form of analysis of the image.

By "a consumable" it is intended to mean a (i.e. one or more) container, a pipette tip, sample tube tray, sample well plate, tip store or plate and/or waste container.

The term "deck" is intended to mean the surface on which the various components of the analyser are located.

According to a second aspect, there is provided a gripper for use in a biological sample processing apparatus for holding a biological sample container, the gripper comprising: at least two jaws, at least one of the at least two jaws being moveable towards and away from each other jaw, the at least two jaws having at least three teeth with each jaw having at least one of the at least three teeth, the teeth being positioned so as to form a pitch circle at a first separation of the jaws, wherein the teeth each have a taper at a tip on a radially outer side of the respective tooth tapering the tip radially inwardly.

This allows containers of different sizes (such as different diameters) to be held due to the arrangement on the pitch circle providing at least three points of contact between the gripper and a container being held. Additionally, the taper allows the teeth to push between adjacent containers when in a tube rack when being lowered to pick up a container. This ability to push between adjacent containers reduces the likelihood of a tooth catching on or crashing into a container other than the container that is being picked up, which would otherwise prohibit the gripper picking up the desired container from the tube rack.

Accordingly, overall, this combines to provide a versatile gripper capable of being used to select specific sample containers. This thereby reduces the risk of an incorrect sample container being moved by the gripper for processing, reducing misprocessing and contamination risks accordingly.

The gripper of the second aspect may additionally include any one or more of the features of the first gripper and/or second gripper of the first aspect.

According to a third aspect, there is provided a method of identifying contamination risk in biological sample processing, the method comprising: obtaining matter from a sample container with an extractor; capturing an image of the extractor following matter being obtained; and identify whether sample is present on the outside of the extractor by analysing content of the captured image.

When sample is identified as being present on the outside of the collector, the process may stop, or a sample may be recorded as void or failed. Typically, the method further comprises issuing an alert when sample is identified as being present on the outside of the collector. This allows a user to check the collector and either remove it or allow processing to continue, potentially after having taken remedial action. The alert allows a user to be informed of a contamination risk.

If, based on the analysis, no sample is identified as being present outside the container, further processing of the sample may continue.

Obtaining matter from the sample container with the extractor may comprise obtaining sample from the sample container with a collector, and further comprising, in the absence of sample outside the container, the sample may be dispensed on to a sample plate.

The method of the third aspect may comprise: obtaining sample from a sample container with a collector; capturing an image of the collector following sample being obtained; and identify whether sample is present on the outside of the collector by analysing content of the captured image. As such, the method may further comprise, in the absence of sample on the outside of the collector, the sample is dispensed on to a sample plate.

Typically, sample is obtained with the collector using a vessel removably attached to the collector, sample being passed into the vessel by the collector to obtain sample, the method further comprising depositing the used vessel at a waste position after sample is dispensed on to the sample plate. The vessel may be a pipette tip, and the collector may be, or may include, an aspirator that aspirates sample into the tip.

The method may further comprise attaching a clean vessel to the collector at a vessel store before obtaining sample from a container.

Obtaining matter from the sample container with the extractor may comprise removing a cap from the container before obtaining sample from the container, the cap being removed by a rotatable gripper engaged with the cap, the container being supported in a fixed position by a holder; capturing an image of the container and cap; and identify whether sample is present outside the container and of the cap by analysing content of the captured image.

Similarly to the above, when sample is identified as being present outside the container, the process may stop, or a sample may be recorded as void or failed. Typically however, the method may further comprise issuing an alert when sample is identified as being present outside the container.

If, based on the analysis, no sample is identified as being present outside the container, further processing of the sample may continue.

The method may further comprise replacing the cap on the container, with the gripper, after sample is obtained from the container.

The method may further comprise transferring, with the gripper, the container to a tube rack after the cap is replaced.

The method may further comprise transferring, with the gripper, a container to the holder from a tube rack before the cap is removed.

Typically, a plurality of samples are obtained by repeating at least the cycle of obtaining matter, capturing an image and identifying if sample is present outside the container, the plurality of samples including a negative control sample, a positive control sample and at least one patient sample. This allows each sample batch to be accompanied by a sample that is intended to provide a negative diagnosis and a sample that is intended to provide a positive diagnosis. This provides quality control and auditing at a batch level to determine reliability of testing per batch, meaning that only individual batches need to be re-tested if an issue is identified instead of all sample batches processed by the affected apparatus/machine from the point it was previously confirmed as reliable. This reduces the quantity of samples needing re-testing, thereby increasing reliability and throughput.

The cycle may of course include the other steps according to the third aspect. Additionally or alternatively, there may be more than one negative and/or positive control samples.

Sample may be obtained from the negative control sample before sample is obtained from the positive control sample to minimise the risk of contamination causing a false positive when the negative control sample is processed.

### BRIEF DESCRIPTION OF FIGURES

Apparatus examples and example methods are described in detail below with reference to the accompanying figures, in which:
Figure 1 shows a perspective view of an example apparatus;
Figure 2 shows a flow diagram of an example process;
Figure 3 shows a flow diagram of an example method;
Figure 4 shows a portion of the example apparatus shown in Figure 1;
Figure 5 shows a perspective view of an example sample plate;
Figure 6 shows a partial view of an example sample rack;
Figure 7 shows a front view of a first example gripper jaw;
Figure 8 shows a back view of the first example gripper jaw;
Figure 9 shows an end-on view of the first example gripper jaw;
Figure 10 shows an upward sectional view of the first example gripper jaw of

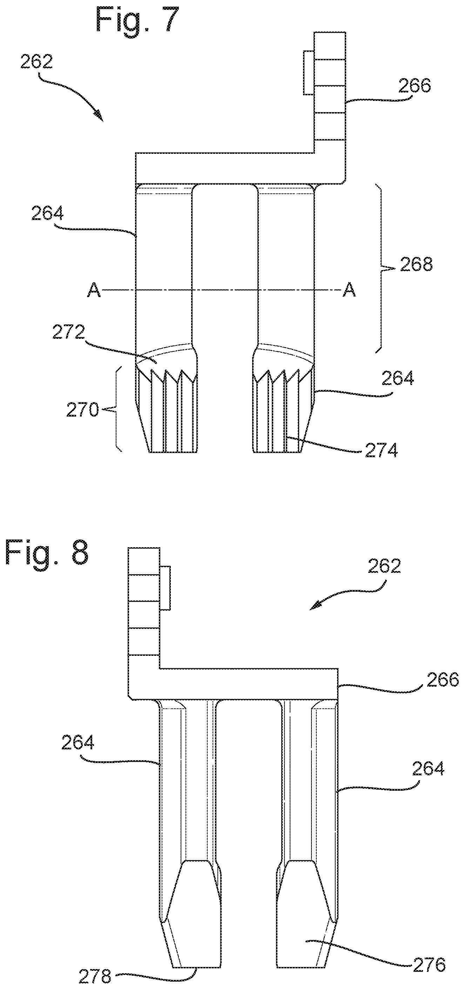

Figure 8 along the line A - A in Figure 7;

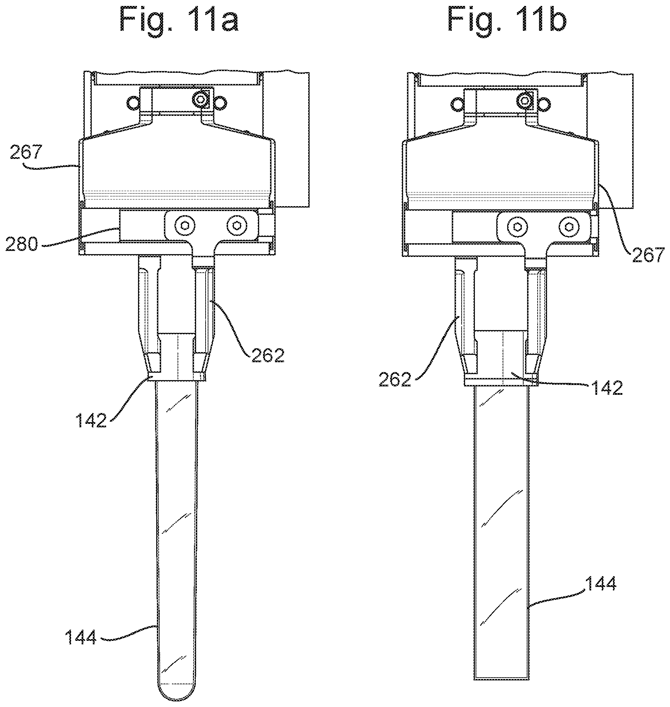

Figures 11a to 11d show side views and end-on views of an example gripper in use;

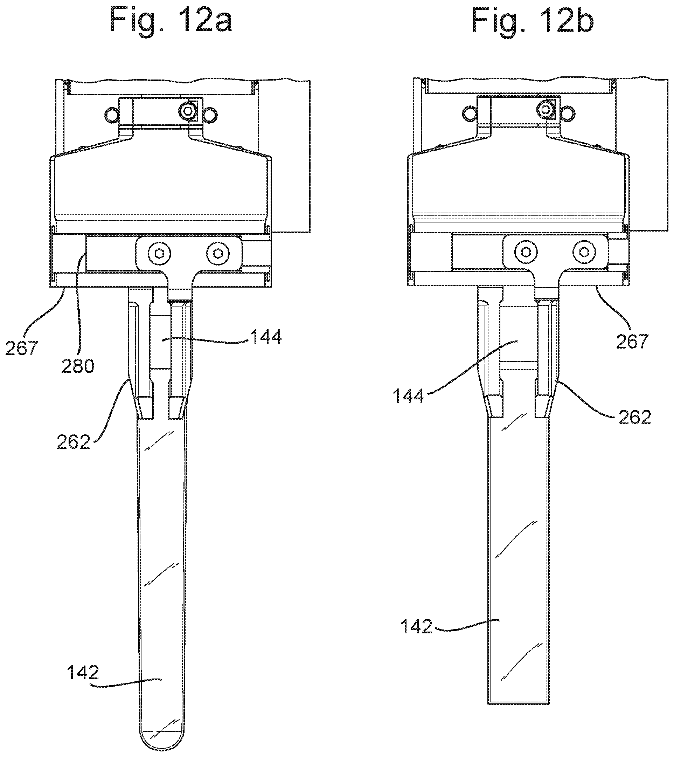

Figures 12a to 12d show further side views and further end-on views the example gripper in use;

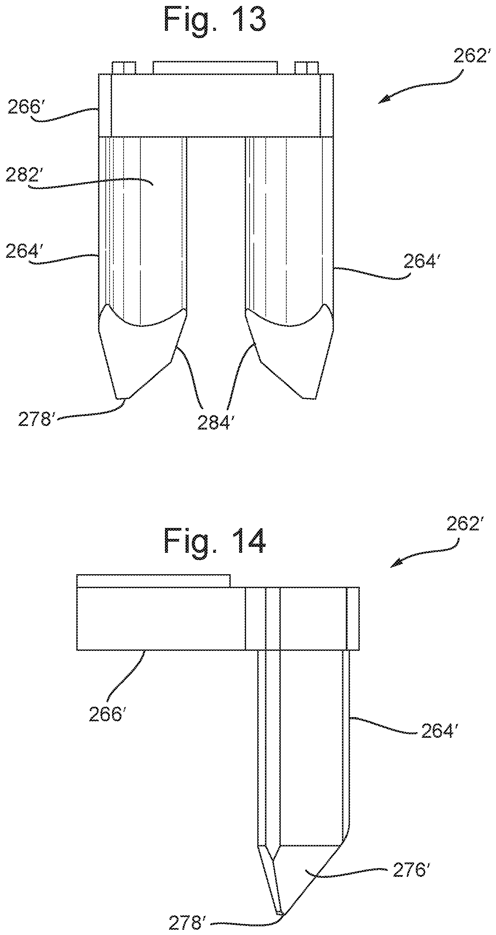

Figure 13 shows a front view of a second example gripper jaw;
Figure 14 shows a side view of the second example gripper jaw;

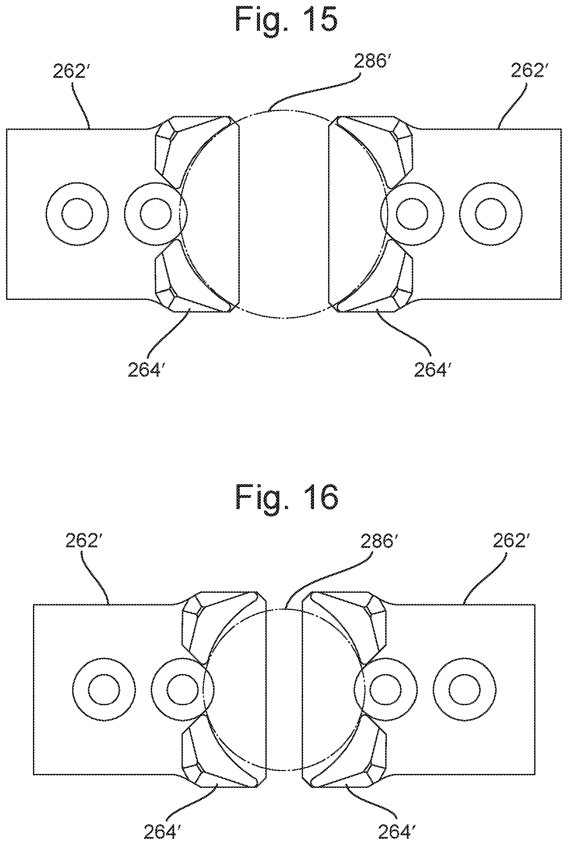

Figure 15 shows a schematic of the second example gripper jaw in use; and
Figure 16 shows a further schematic of the second example gripper jaw in use.

### DETAILED DESCRIPTION

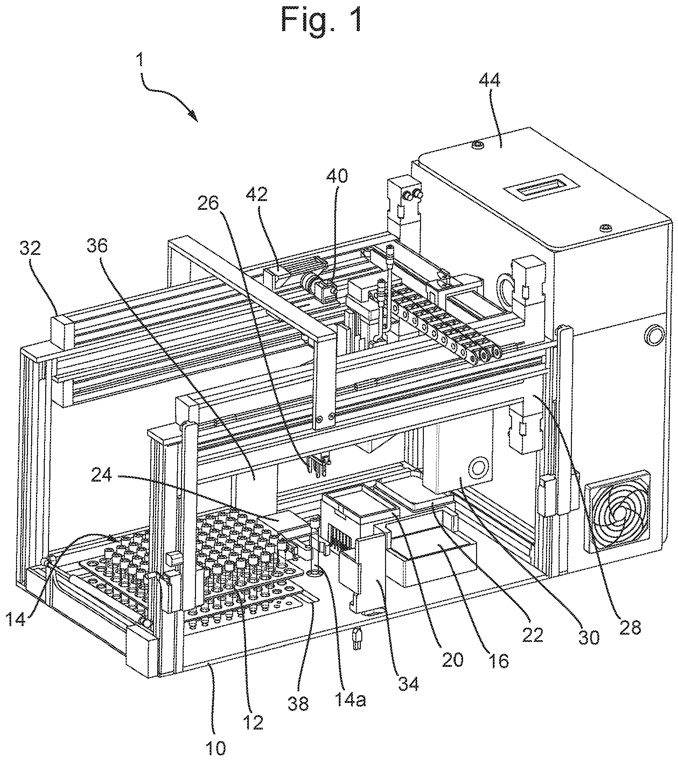

An example apparatus is generally illustrated at 1 in Figure 1. This is intended to be used for automated extraction and transfer of biological samples from a batch of sample containers provided by a patient to a sample well plate to allow the samples to be processed.

To that end, the apparatus 1 has a deck 10 on to which a tube rack 12 is able to be placed. This rack is able to be placed on the deck by a user or a portable accessioning robot is able to place the rack on the deck from another location.

During use, the tube rack 12 contains a batch of sample tubes 14, which can also be referred to as sample containers. The sample tubes are either present in the tube rack when the tube rack is placed on the deck 10, or are loaded into the tube rack before operation of the apparatus 1.

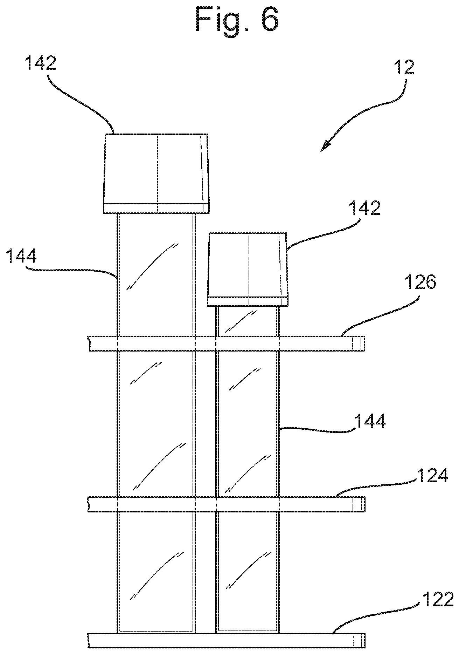

As most clearly seen in Figure 6 (although also shown in other figures), each sample tube 14 has a cap 142 and a receptacle 144. The cap is attached to each receptacle by a thread (not shown).

Returning to Figure 1, the tube rack 12 is able to hold between 90 and 110 sample tubes 14. In various examples, the rack is able to hold 92, 93 or 108 sample tubes.

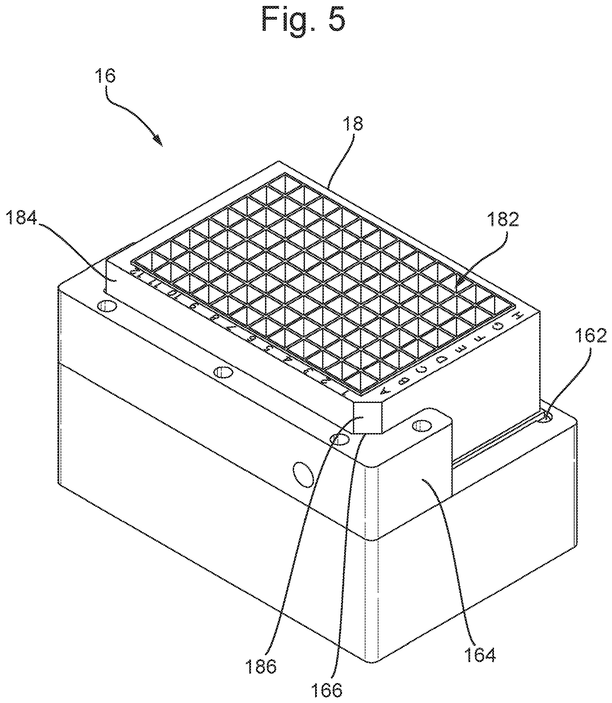

To allow sample to be obtained from each sample tube 14 for processing, the apparatus 1 has a number of other components. This includes a sample plate receiving section 16 (corresponding to the third position detailed above), where a sample plate 18 (also referred to as a sample well plate or well plate), such as the well plate shown in Figure 5, is able to be positioned during use of the apparatus.

As shown in Figure 5, the sample well plate 18 is a conventional sample well plate. The sample well plate used with the apparatus 1 is typically a deep well plate.

This has a plurality of sample wells 182, with each well able to receive sample. The number of wells in the well plate has a comparable number of sample wells to the number of sample containers. In the example shown in Figure 5, the well plate has 96 sample wells.

Continuing to consider Figure 5, this shows that the sample plate receiving section 16 has recess 162 in which the well plate 18 is able to be fitted when placed in the receiving section. This allows a user to reliably load the well plate in the correct position.

The sample plate receiving section 16 also has an upstanding wall 164 against which upright walls 184 of the well plate 18 abut when the well plate is located in the recess 162. The upright wall has a "U" shape thereby abutting at least part of three sides of the well plate. This causes the upright wall to have two corners. One of these corners has a chamfer 166. This is provided in order to be complementary to an orientation marker 186 on a corner of the well plate (again provided in this example by a chamfer). By the upright wall having this complementary shape, it means the well plate will not fit properly in the recess or receiving section when placed in the receiving section in an incorrect orientation.

To transfer sample from each sample tube 14 to the sample well plate 18, conventional pipette tips are used. As explained in more detail below, a clean pipette tip is used for each sample. Accordingly, as shown in Figure 1, the apparatus 1 has a tip store 20 (corresponding to the selection position detailed above).

Once each tip has been collected from the tip store and used (i.e. to obtain sample from a sample tube 14 and deposit the obtained sample in a sample well 182 of the well plate 18), the tip is disposed of. This is achieved by placing the tip in a waste container 22 (corresponding to the fourth position details above).

The sample plate receiving section 16, tip store 20 and waste container 22 are arranged adjacent each other. As can be seen from Figure 1, this arrangement causes these three elements to meet at a point. This results in the waste container located on the far side of the tip store from the sample rack 12, and the sample plate receiving section located to a side of the tip store and waste container.

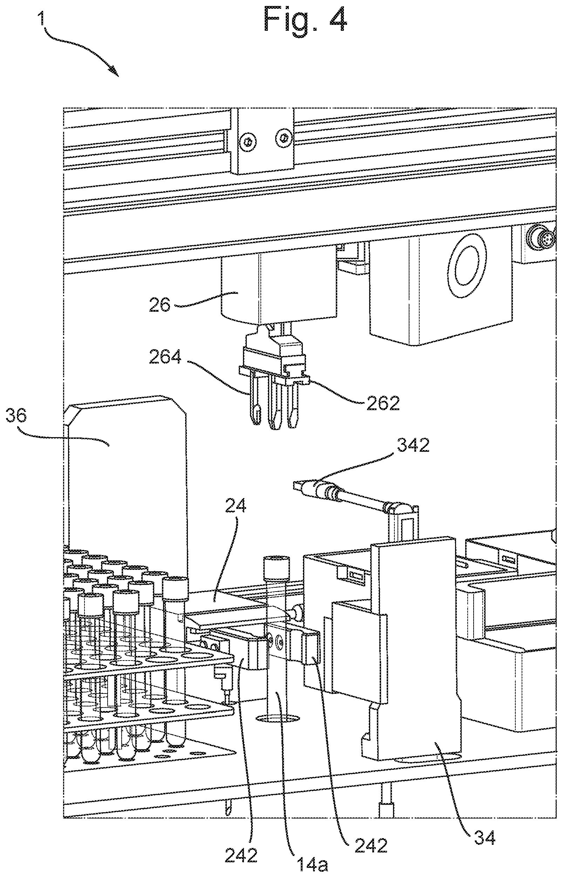

As explained in more detail below, sample is obtained from each sample tube 14 one at a time. Figures 1 and 4 show a sample container 14a ready for processing to obtain sample therefrom. This is able to be held in place for processing by a fixed gripper 24 (also referred to as a holder). This has opposing pincer jaws 242. In use these are able to move towards each other to support the sample tube by engaging the receptacle 144 of the tube being supported. This supports the sample container in an upright position. In this position, in some examples a base of the receptacle is elevated above the deck 10, and in other examples, such as the example shown in Figure 4, the base of the receptacle is in contact with the deck.

To move a sample tube 14 between the tube rack 12 and the fixed gripper 24, the apparatus has a moveable gripper 26, which is primarily shown in the context of the apparatus 1 in Figures 1 and 4. The moveable gripper is supported by a gantry 28. The gantry is an XY gantry, which provides the moveable gripper with the ability to move laterally relative to the deck 10. The moveable gripper is also moveable towards and away from the deck (i.e. in the Z direction relative to the movement directions of the XY gantry).

The moveable gripper 26 is able to hold each sample tube 14 it picks up with a pair of opposing jaws 262, each of which have a pair of teeth 264. As set out in more detail below, these teeth are able to grip the cap 142 or the receptacle 144 of each sample tube.

When the teeth 264 of the moveable gripper 26 are gripping the cap 142 of a tube 14 and the fixed gripper 24 is supporting the sample tube (thereby holding it in a fixed position and orientation), the cap is able to be removed from the sample tube. This is achievable due to the jaws 262 being rotatable relative to the rest of the gripper.

An example gripper that is suitable, in combination with the jaws 262, to provide the gripper 26 in the examples is a Festo EHMD-40-RE-GE-16 rotary gripper module. This has an endless rotational angle, a stroke per jaw of 15 millimetres (mm) with the controllable stroke range being 0 mm to 15 mm. The jaws are moveable in parallel by movement of each of two fingers (also referred to below as a slidable plate). The gripping force per jaw is between 3 and 14 newtons (N), the maximum static torque in each of the x, y and z directions (i.e. the Mx, My and Mz static torque) able to be applied is 1.5 N for each direction. The duty cycle is 100% and the module uses a nominal voltage of 24 volts (V). The module weight is 724 grams (g).

To allow sample to be obtain from a sample tube 14 supported by the fixed gripper 24, the apparatus also has a collector 30. The collector includes an aspirator capable of aspirating and dispensing liquid. This is held above the deck 10 and supported by a further gantry 32. The further gantry is also an XY gantry. This allows movement of the collector between the tip store 20, sample tube supported by the fixed gripper (the collector being positioned at the fixed gripper corresponding to the first position detailed above), sample well plate 18 and waste container 22. Additionally the collector is moveable in the Z direction in order to lower an end of the aspirator to engage with a pipette tip in the tip store and raise the pipette tip out of the store; lower the pipette tip into a sample tube supported by the fixed gripper to aspirate sample from the sample tube into the pipette tip (this lowered position corresponding to the second position detailed above) and raise the pipette tip out of the sample tube; lower the pipette tip into a sample well 182 of the sample plate 18 to deposit sample in the well and raise the tip out of the well; and lower a tip into the waste container, disengage with the pipette tip, and, if needed, raise the aspirator again. The collector is of course moved in the XY direction to move the collector between the positions where the Z direction movement occurs.

As shown in Figure 1 and Figure 4, the apparatus 1, also has a camera 34, forming part of an imager. The camera also has a lens (not shown) thereon in a number of examples.

The camera 34 is located between where the tube rack 12 is located on the deck and the sample plate receiving section 16. The camera is orientated to face towards the fixed gripper 24. The field of view of the camera includes the position where the top of a sample tube 14a is located when supported by the fixed gripper and some space above the sample tube big enough to encompass the pipette tip or the portion thereof that is inserted into the tube receptacle 144 after it has been removed from the receptacle. As is described in more detail below, this camera is used to identify presence of sample or a swab where it should not be, namely outside of a sample tube or pipette tip. The camera in various examples is a CMOS camera. Other cameras are also able to be used in place of this camera.

To provide a uniform background for the field of view of the camera 34, an upright wall 36 is located on an opposing side of the fixed gripper 24 from the camera. In the example shown in Figures 1 and 4, this upright wall is black. In other examples, the upright wall may be a different colour as long as that colour provides a high contrast background to the sample, typically the sample is white or beige respiratory mucus.

In order to catch sample that is not held in a sample tube 14 by the collector or in the sample well plate 18, the deck 10 has a channel 38. In the example shown in Figure 1, this channel is adjacent the location where the tube rack 12 is located in use, and extends along the length of the tube rack. This allows drips from any sample tube to be blocked from passing towards the fixed gripper 24 or other parts of the apparatus 1 sensitive to contamination. The channel is formed by a depression in the deck thereby providing a location that liquid is encouraged to drain into if present on the deck.

A further camera 40 is also provided in the apparatus 1. This has a field of view encompassing the deck 10. In the example shown in Figure 1, this is achieved by the further camera being located at a position above the deck, but orientated with its sensor and a lens directed across the deck towards a mirror 42 angled to provide an image of the deck on the sensor of the further camera via a lens.

The further camera 40 captures one or more images of the deck 10 during setup of the apparatus 1 in preparation for a process of extraction of samples from sample tubes 14. This is to allow for checking that the consumables involved in the extraction process are present and have been loaded into the apparatus in the correct positions and orientation. This typically includes checking the appropriate number of pipette tips have been loaded into the tip store 20 and none are missing; the waste container 22 has been loaded and that no tips remain from a previous run of the process; the batch of sample tubes have been loaded and are in the correct orientation in the tube rack 12 (which itself is present), including loading of any (positive and/or negative controls); and/or the sample well plate 18 is present.

In various examples this checking is achieved by the further camera 40, or a controller 44 that analyses images captured by the further camera. The controller typically takes the form of a computer or one or more processors forming part of the apparatus 1. The checking compares one or more images captured by the further camera to a model of what is expected to be present. In some examples the model is developed using a machine learning process trained using images of a comparable setup or arrangement. In other examples, the checking is able to be carried out by a user confirming what is present in each image captured by the further camera compared to what is intended to be present for the process to be run. Completion of the checking allows any missing consumable to be loaded and/or any incorrectly positioned orientated item to be corrected. When a means other than user reviewing images is used, should the checking identify any issue that would negatively affect the running of the process, a prompt is provided to a user.

To assist with uniformity in positioning of sample tubes 14 in the tube rack 12 when loaded in the apparatus 1, the apparatus is tilted to incline the deck 10 relative to a horizontal plane. In various examples the angle the apparatus is tilted by is 2.3°.

In use, the apparatus 1 is typically located in a commercial category 2 extraction (or fume) hood or cabinet. This limits the size of the apparatus, since such hoods or cabinets typically have an internal cavity into which the apparatus is able to be placed of up to about 1 metre (m) in depth, up to about 2 m in width and up to about 2 m in height.

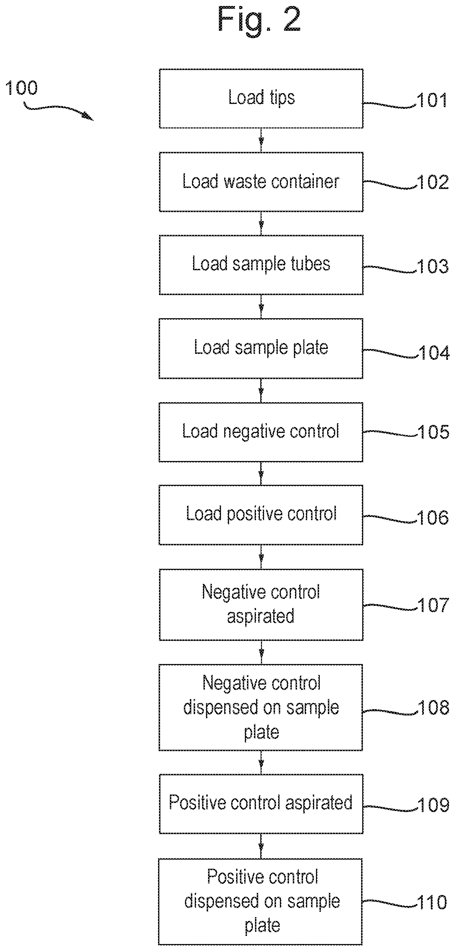

Turning to how the apparatus 1 is prepared for use, a process for achieving this is set out in Figure 2 as generally illustrated at 100. The steps of this process are to first load pipette tips at step 101. These are loaded into the tip store 20.

The next step, step 102, is to load the waste container 22. This is followed, at step 103, by loading the sample tubes 14. These are loaded in the tube rack 12 on to the deck 10 of the apparatus 1. The sample plate 18 is then loaded, at step 104, into the sample plate receiving section 16.

At steps 105 and 106 respectively, a negative control sample and a positive control sample are loaded into the apparatus. To load the control samples into the apparatus, the positive and negative control samples are typically mounted, by a user, into a bracket (not shown) located between the camera 34 and the fixed gripper 24. The bracket has two pillars, and the negative control sample is mounted in a recess in one pillar and the positive control sample is mounted in a recess in the other pillar. The negative and positive control samples are typically held in containers of different sizes and shapes to each other. Each pillar and the respective recess therein have a shape adapted to the shape of one of the control samples, so as to provide a complementary fit for only one of the control samples in order to reduce the likelihood of one control sample being mounted to the incorrect pillar. Once mounted to the pillars, each of the negative control sample and positive control sample are opened by a user. So as to minimise the likelihood of contamination, the negative control sample is opened before the positive control sample is opened. In other examples, the control samples are typically loaded into specified locations in the tube rack 12.

At this point, if checking has not been conducted in parallel, checks are carried out to identify whether all relevant consumables (i.e. all the items placed into the apparatus so far in the process) have been placed in the apparatus and in the correct orientation and position where relevant. As detailed above, this is carried out in some examples using the further camera 40.

The next step, step 107, is for the negative control sample to be aspirated, which is followed, at step 108, by the aspirated negative control sample being deposited into a sample well 182 of the sample well plate 18. At steps 109 and 110 respectively, the same process is carried out for the positive control sample, namely the positive control sample is aspirated and deposited into a sample well of the sample well plate. In examples where the control samples are mounted into the bracket located between the camera 34 and the fixed gripper 24, in addition to the other positions to and between which the collector 30 is moveable (as detailed below), the collector is also moveable to the positions in which the negative control sample and positive control sample are each located.

Once these steps are complete, patient samples can then be processed. The process for aspirating and depositing or dispensing samples, whether the positive and negative control samples or patient samples is set out in more detail below.

While one or more of the steps of this setup process 100 may be carried out in a different order or at the same time, the order in which those steps are set out in Figure 2 seeks to minimise the risk of contamination. This is achieved by carrying out steps where the effect of contamination is more significant earlier than steps where the effect is less significant, which is what is achieved by carrying out the steps in the order set out above.

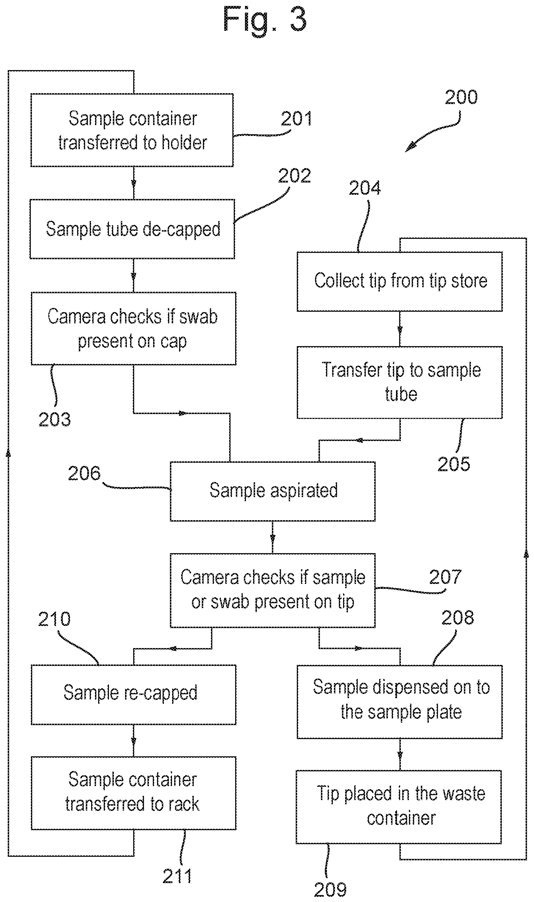

Figure 3 sets out the method applied to process a sample tube 14 as generally illustrated at 200. This process is the same for the positive and negative control samples as well as for a patient or non-control sample.

At step 201, a sample tube 14 is transferred to the holder. This is achieved by the moveable gripper 26 taking hold of the relevant sample tube, picking up the sample tube and moving it to the fixed gripper 24. The process by which the moveable gripper takes hold of a sample tube is set out in more detail below.

On arrival of the sample tube 14 at the fixed gripper 24, the pincer jaws 242 then close on the receptacle 144 of the tube in order to support the tube. At this stage the moveable gripper 26 is able to release the sample tube receptacle 144.

Once the sample tube receptacle 144 has been released by the moveable gripper, the gripper moves up the sample tube 14 and takes hold of the cap 142. The moveable gripper then rotates while holding the cap. This removes the cap from the sample tube completing step 202.

The moveable gripper 26 lifts the cap 142 away from the receptacle 144. At this stage, at step 203, the camera 34 captures an image of the open top of the receptacle and the exposed underside of the cap. The image is analysed (such as by conducting image processing on the image and/or its content) to identify if the swab is adhered to the cap or whether removal of the cap from the receptacle has caused the swab or sample to project outside of the receptacle. Each of these represent a contamination risk. In some examples, an audible alarm or alert will sound if a contamination risk is detected from the image analysis, and, in some cases, a controller 44 of the apparatus 1 will prompt a user to perform a number of actions such as inspect the apparatus (i.e. to look inside the apparatus by opening a door since the apparatus is typically a closed box within which the various components are held). A further action a user may be prompted to perform is to place any exposed swabs back into the receptacle and/or reach a decision on whether contamination has occurred.

The image analysis that is conducted on the images is contrast detection to identify whether white or beige objects are present in the image against the high contrast background provided by the upright wall 36.

If contamination has occurred, the cap 142 is typically replaced on the receptacle 144. The sample tube is then either removed from the apparatus 1 or placed back in the tube rack 12 in its original location or in a position in the rack reserved for failed and/or contaminated sample tubes.

The next step the sample tube 14 is to undergo is aspiration of the sample. However, some steps are needed before this. The first of these steps, step 204, is that a tip is collected from the tip store 20. This is achieved by the collector 30 lowering an aspirator on to a clean pipette tip held in the tip store and engaging the tip and aspirator in a conventional manner.

Following this, at step 205, the tip is transferred to the sample tube receptacle 144 supported by the fixed gripper. To carry this out the collector lifts the aspirator with the tip now engaged with the aspirator and moves from the tip store 20 to a position above the open receptacle (i.e. to the first position referred to above).

Step 204 may be carried out at any stage up to this point. Step 205 however is typically only carried out after step 203, and based on no contamination risk being detected from the analysis of the captured image.

When the collector 30 arrives at the receptacle, sample is able to be aspirated in order for the collector to obtain sample for transporting elsewhere. As such, at step 206, sample is aspirated (from the receptacle 144 supported by the fixed gripper 24).

This step is enacted by the controller 30 lowering the tip engaged with the aspirator into the receptacle 144 supported by the fixed gripper 24. The tip is lowered to a sufficient depth in the liquid within the receptacle to allow enough liquid to be drawn into the tip for suitable later usage. The aspirator then draws liquid into the tip through an aperture in the tip.

Once sample has been aspirated, the controller 30 raises the pipette tip out of the receptacle 144 supported by the fixed gripper 24 back to a position above the open receptacle. At step 207 the camera 34 captures an image to allow a check to be completed to identify if (highly viscous) sample or swab is present on the outside of the tip or outside the receptacle, since these are contamination risks. To achieve this, as with the image captured of the cap 142 and receptacle, the image is analysed in the same manner. In some examples, an audible alarm will again sound if a contamination risk is detected. Additionally or alternatively, a controller 44 of the apparatus 1 may prompt a user to perform a number of actions, such as inspect the apparatus, place any exposed swabs back into the receptacle and/or reach a decision on whether contamination has occurred. If contamination has occurred, the same actions as detailed above in relation to the earlier image are carried out.

In some examples, the tube rack 12 has 11 free positions in a row for samples which have failed to be extracted for reasons including failure of barcode detection (on which more detail is provided below) and sample aspiration failure. In various examples, the process of sample extraction from sample tubes 14 is cancelled for a batch if any of the following occur: there are five consecutive sample failures; there are 11 total sample failures in the batch; there is a contamination issue within the apparatus 1; and/or the sample extraction process 200 is aborted due to user request.

Should no contamination risk be identified by analysing the further image, the process continues. Accordingly, at step 208, sample is dispensed on to the sample plate 18. This is achieved by the controller 30 first transporting the aspirator and engaged tip containing the aspirated sample to the sample plate. The tip is then lowered into a sample well 182 and the sample held within the tip is deposited in the well.

Once the sample is deposited in a sample well 182, the tip is no longer needed. As such, the tip is placed in the waste container 22 at step 209. To carry this out the controller 30 moves the aspirator and engaged tip to the waste container and disengages the tip from the aspirator in a conventional manner. In some examples, this includes lowering the tip into a tip holder, and in other examples this instead includes allowing the tip to drop into a bin or other form of container.

The collector 30 is not needed further for processing of the sample that has been placed in the sample well 182. Therefore the collector is able to return to the tip store 20 to re-start the cycle for the next sample once it is supported by the fixed gripper 24.

The path followed by the collector 30 is a self-avoiding walk. In some examples this may exclude points along the path where the collector is holding the aspirator and, when engaged with the aspirator, the pipette tip only over one of the tip store 20, sample well plate 18 and/or waste container 22. In any case, by implementing a self-avoiding walk, the collector does not travel over the same point twice, limiting contamination risk.

Either while steps 208 and 209 are taking place, before or after, or some combination thereof, steps 210 and 211 are carried out. Step 210 involves replacing the cap 142 on the receptacle 144 supported by the fixed gripper 24. This is achieved by the reverse of the process used in relation to step 202 to remove the cap. Accordingly, the moveable gripper 26 is moved to a position in which the cap is located above the receptacle. The cap is then lowered to the receptacle and rotated by the gripper in order to screw the cap back on to the receptacle.

While the cap 142 is not present on the receptacle 144 supported by the fixed gripper 24, it is retained by the moveable gripper 26. To reduce contamination risk from the cap, the moveable gripper is moved away from the receptacle to a position considered safe to retain a cap at during any steps after the image that includes the cap is captured and the cap being replaced on the receptacle. During this movement and while held in position, the cap is held over the channel 38 in the deck 10 so that any drips from the cap are captured.

Following replacement of the cap 142 on the receptacle 144 supported by the fixed gripper 24, the moveable gripper 26 releases its hold on the cap. The gripper is then lowered to take hold of the receptacle again. At this point the fixed gripper releases the receptacle from its pincer jaws 242. This allows step 211 to be carried out to transport the closed sample tube 14 back to the tube rack 12. On arrival at the tube rack the sample tube is lowered into a suitable location in the rack, after which the moveable gripper releases the sample tube and is raised away from the tube. On completion of step 211, the moveable gripper is able to re-start the process cycling through each sample tube 14 to be processed.

Each sample tube 14 is intended to have a barcode located on the receptacle 144 of each tube. In various examples, the barcode on each sample tube is read before the respective sample tube is gripped by the fixed gripper 24. This is achieved by the moveable gripper 26 lowering the sample tube into the jaws 242 of the fixed gripper. A barcode reader 342 (shown in Figure 4) is located just above the camera 34. As the sample tube is lowered, at the point at which the barcode on the sample tube becomes aligned with the barcode reader, the barcode reader is active and the moveable gripper is rotated allowing the barcode reader to read the barcode. On reading of the barcodes, one or more records may be updated accordingly.

In other examples, during a use of the camera to capture an image, detection of whether this barcode is present is conducted. This may be achieved through image processing or by some other means. If a barcode is present, in some examples the barcode is read and one or more records may be updated accordingly.

Regardless of the manner in which a barcode is attempted to be read or detected, if no barcode is detected, read or readable, in some examples this may be treated as a contamination risk is treated, causing the sample tube to either be removed from the apparatus 1 or returned to the tube rack 12 at an appropriate location. For example, when a unique reference number (URN), such as in the form of a barcode, is scanned, the URN is checked against the expected URN in batch information. If the barcode matches up with the expected batch URN, processing of the sample tube 14 continues. On the other hand, if the URN does not match the batch information, the sample tube is "cancelled", and it is then placed back into its original position and flagged to a user for re-extraction.

By carrying out these steps each individual sample tube 14 held in the sample rack 12 has sample aspirated therefrom and placed in a sample well 182. The samples present in the sample well are then able to be processed further for diagnosis or some other testing or analysis, such as by PCR testing.

When multiple sample tubes 14 are to be processed, the sample tubes may originate from a number of different sources, or relate to sample collection carried out by a plurality of providers. This means there are many different shapes and sizes of sample tube. These differences are typically in length and/or diameter of the receptacle 144, and the taper angle, height, shape, diameter and/or colour of the cap 142.

An example of differences between sample tubes 14 is shown in Figure 6. In this figure there are two sample tubes located next to each other in a tube rack 12. The tube rack has a base plate 122, on which a base of each sample tube sits when located in the tube rack; a middle plate 124, which has an array of apertures (not shown) through which a receptacle 144 of each sample tube located in the tube rack is positioned; and an upper plate 126 that also has an array of apertures (not shown) through which a receptacle 144 of each sample tube located in the tube rack is positioned.

There is then a clearance between the upper plate 126 and a lower end of the cap 142 of each sample tube 14 located in the tube rack 12. As can be seen from Figure 6, for sample tubes with shorter receptacles 144, this clearance is significantly less than for sample tubes with longer receptacles. In the example shown, the shorter sample tube (the right hand tube in Figure 6) has a clearance of about 6.30 mm (such as ±0.50 mm) between a top surface of the upper plate and the lower end of the cap. This compares to a clearance of about 25.40 mm (such as ±0.50 mm) between a top surface of the upper plate and the lower end of the cap for the longer sample tube (the left hand tube in Figure 6). Additionally, the diameter of the cap (and corresponding of the receptacle) of the shorter sample tube is significantly smaller than the diameter of the cap (and correspondingly of the receptacle) of the longer sample tube.

The apparatus of an aspect described herein and its various components are intended to be able to obtain and process sample from sample tubes 14 of a range of sizes. Some example parameters of sample tubes a user would expect to be able use the apparatus to process is shown in Table 1:

**Table 1**

| Cap colour | Cap diameter (mm) | Cap length (mm) | Receptacle length (mm) | Receptacle base diameter (mm) | Receptacle top diameter (mm) |
|---|---|---|---|---|---|
| Orange | 21.50 | 16.20 | 102.37 | 15.65 | 15.86 |
| Red | 16.60 | 15.00 | 82.60 | 12.70 | 13.12 |
| Red | 16.49 | 13.80 | 106.60 | 11.60 | 12.60 |
| White | 16.37 | 12.56 | 83.80 | 12.91 | 13.43 |
| Purple | 16.90 | 14.77 | 82.33 | 12.68 | 13.00 |

From Table 1 it can be seen that there is almost a 5 mm range in cap diameter and a range of almost 9 mm between the largest cap diameter and smallest receptacle top diameter. Additionally, the length of receptacle range is about 20 mm. In Figure 6, the sample tubes 14 shown are the sample tube with the orange cap and with the sample tube with the red cap and a receptacle length of 82.60 mm.

Due to the shape of the caps 142, which may be rounded (such as having a barrel shape), tapered, cylindrical or another shape, a sample tube 14 is able to be held more securely by the moveable gripper 26 during transport between the tube rack 12 and the fixed gripper 24 when held by the receptacle 144. This means that to pick up a sample tube from the tube rack, the gripper needs to pass round the cap of the sample tube and engage the receptacle. Should the receptacle of that sample tube be short, there will be very little clearance between the upper plate 126 of the tube rack and the lower end of the sample tube's cap. This therefore makes the sample tube difficult to pick up. This is especially the case when there are other sample tubes around the sample tube to be picked up, thereby limiting the amount of lateral space available around that sample tube.

In order to address this point and the variation in size of the cap and receptacle diameter, we have developed two sets of gripper jaws.

A first example gripper jaw 262, while visible in Figure 4, is shown most clearly in Figures 7 to 12d. A second example gripper jaw is also shown in Figures 13 to 16.

Starting with the first example gripper jaw 262, this has a pair of teeth 264 with a separation therebetween of about the same width as the teeth. Each tooth of the pair of teeth is connected to a support plate 266, by which the respective jaw is able to be connected to a gripper module 267 in use.

Each tooth 264 is provided by an elongate rod that, in example shown in the figures, has a length of about 4.5 to 5 times the maximum width of the respective tooth. In other examples the length to width ratio is able to be different.

Figure 7 shows a side of a jaw 262 that faces towards an opposing jaw when mounted to the gripper module 267. As such, this is an inwardly facing side of the jaw, and the corresponding inwardly facing sides of each tooth 264 of the jaw are shown in Figure 7.

As is most clearly shown in Figure 7, the inwardly facing side of each tooth 264 has an upper portion 268 and a lower portion 270. In this example the upper portion has a length of about double the length of the lower portion. There is also a chamfered portion 272 linking the upper portion and the lower portion of each tooth.

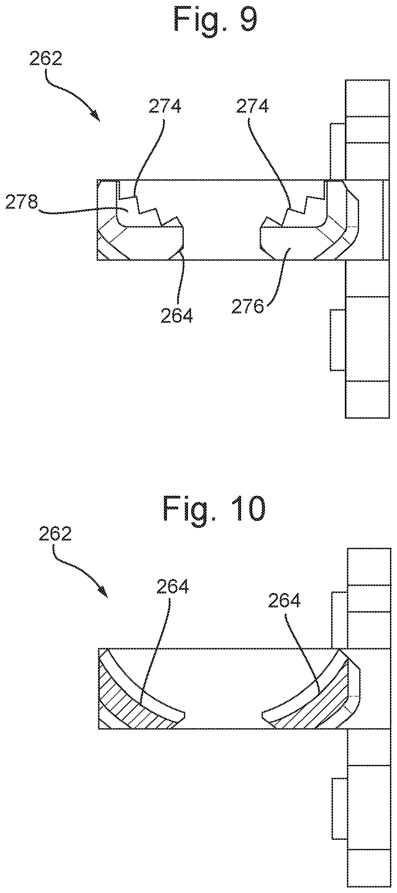

In the example shown in Figures 7 and 10, the upper portion 268 of each tooth has a smooth and featureless inwardly facing surface. As can be seen from Figure 10 the inwardly facing surface of the upper portion is curved. In the example shown in Figure 10, the diameter of curvature of the curved inwardly facing surface is about 23.25 mm. When comparing to Table 1 above, it can be seen that this is larger than the diameter of the cap 142 of any of the sample tubes 14.

Turning to the lower portion 270 of each tooth, instead of a smooth, featureless inwardly facing surface this has a set of splines 274. The longitudinal axis of each splines is aligned with the length of the tooth 264 it is part of. These provide a serrated surface. In the example shown in the figures (most clearly shown in Figures 7 and 9) the splines are equally spaced. As with the inwardly facing surface of the upper portion 268, the splines have a curved arrangement, with the splines forming points on a notional pitch circle (which is shown most clearly in Figure 9). In the example shown in the figures, the diameter of this pitch circle is also 23.25 mm.

Even though the diameter of curvature of the inwardly facing surface of the upper portion 268 of each tooth is the same as the diameter of the nominal pitch circle of the splines 274 of the lower portion 270, the splines project radially inward of the inwardly facing surface of the upper portion. In view of this the chamfer section 272 provides an inwardly facing inclined surface. In the examples shown in the figures, this difference in most radially inward points is in the range of about 2 mm to about 4 mm.

The difference in radial position of the inner most point of each of the upper section 268 and lower section 270 of each tooth, and thereby of respective jaws 262 means that when two opposing jaws are mounted to a gripper module 267 with inwardly facing surfaces facing each other, the upper sections define a cavity therebetween with a larger cross-sectional area in a plane perpendicular to the length of the teeth than a corresponding cavity defined by the lower sections. As set out in more detail below, this allows a cap 142 of a sample tube 14 to fit between the teeth while the splines engage the receptacle 144 of the sample tube.

As shown in Figure 8 and Figure 9, a radially outer surface of each tooth, has a taper 276. The taper provides an incline on the radially outer surface that reduces the radial thickness of the respective tooth to provide a minimum radial thickness at a tip 278 of the tooth. The tip of each tooth is located a distal end of the respective tooth relative to the connection of the tooth to the support plate 266.

When the jaws 262 are being lowered to pick up a sample tube 14, the taper 276 allows the teeth 264 to slide into a small gap between adjacent sample tubes. Additionally, due to the angle of the taper, sample tubes around the sample tube 14 being picked up are push away to provide more space for the jaws.

The gripper jaws 262 corresponding to the example jaws shown in Figures 7 to 12d have teeth of about 30 mm to 35 mm long. The jaws are typically made of 316 stainless steel and have a weight of about 18 g per gripper. This provides a suitable strength jaw while being easy to manufacture, such as by a CNC machine.

In relation to how the gripper jaws 262 are used, this is most clearly seen from Figures 11a to 11d and 12a to 12d. These figures show the gripper module 262 and jaws 262 gripping two sizes of sample tub 14 in different positions. In each of these figures, at least one jaw is depicted as a wireframe to show the arrangement of the elements of the figures that would otherwise be hidden. In practical examples, this jaw is a solid piece of material.

Figure 11a and 11b show the gripper module 267 holding gripper jaws 262 in engagement with a cap 142 of a sample tube 14. Each cap is held by the splines 274 of each jaw tooth 262.

The gripper jaws 262 are connected to a slidable plate 280 of the gripper module 267. It is movement of this plate by the gripper module that allows movement of the opposing pair of jaws towards and away from each other.

The sample tubes 14 with associated caps 142 and receptacles 144 shown in Figures 11a and 11b correspond to the sample tubes shown in Figure 6. The sample tube with the smaller diameter cap and receptacle tube is shown in Figure 11a, and the sample tube with the larger diameter cap and receptacle tube is shown in Figure 11b. Due to the cap shown in Figure 11b having a larger diameter than the cap shown in Figure 11a, the opposing jaws 262 shown in Figure 11b are shown as being spaced further apart than the jaws shown in Figure 11a.

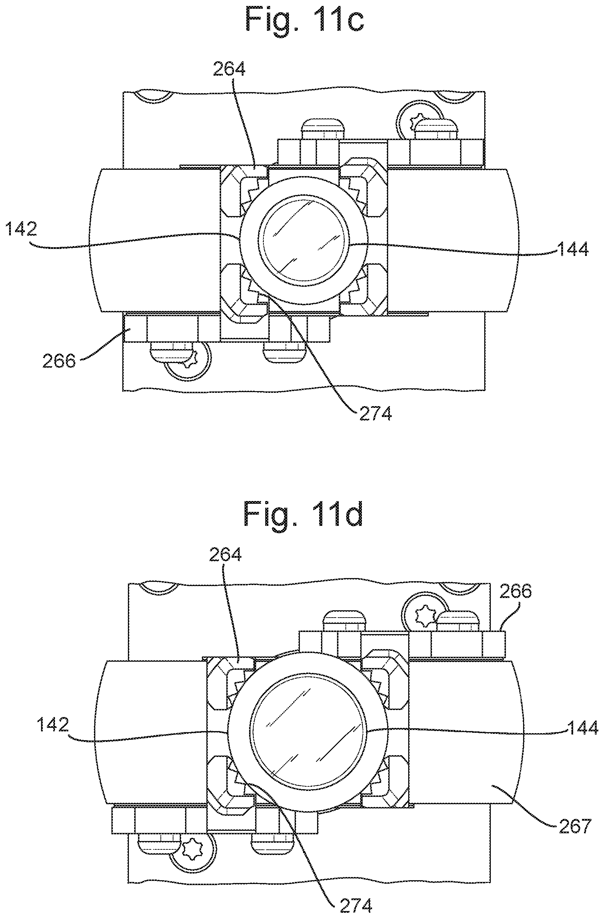

As can be seen from Figures 11c and 11d, the different size of cap 142 being held by the jaws 262 causes the engagement between the splines 274 and the respective cap to differ. For the smaller cap, shown in Figure 11c, it can be seen there are four splines engaged with the cap, one spline per jaw tooth 264. This is due to the size of the cap relative to the size of the nominal pitch circle the splines of each tooth form part of. For the larger cap, shown in Figure 11d, due to the closer proximity in cap diameter and diameter of the nominal pitch circle of the splines, there are four splines engaged with the cap per jaw tooth, and therefore 16 splines overall.

The cap 142 of the sample tube 14 being held by the gripper 26 is typically only used when the gripper is to rotate to remove the cap. When a sample tube is to be transported between different locations, the sample tube is instead held in the gripper jaws by the receptacle 144. This arrangement is shown in Figures 12a to 12d.

Figures 12a and 12b show the same arrangement as Figures 11a and 11b other than showing the sample tubes 14 held at the respective receptacle 144 instead of the cap 142. As such, in Figures 12a and 12b, the engagement between the splines 274 and each sample tube is lower down the length of the sample tube, on the respective receptacle. This raises the cap relative to the jaws into the cavity defined between the jaws above the splines.

As in Figures 11a and 11b, in Figures 12a and 12b, the gripper jaws 262 are connected to a slidable plate 280 of the gripper module 267. The sample tubes 14 with associated caps 142 and receptacles 144 shown in Figures 12a and 12b continue to correspond to the sample tubes shown in Figure 6. The sample tube with the smaller diameter cap and receptacle tube is shown in Figure 12a, and the sample tube with the larger diameter cap and receptacle tube is shown in Figure 12b. Due to the receptacle shown in Figure 12b having a larger diameter than the receptacle shown in Figure 12a, the opposing jaws 262 shown in Figure 12b are shown as being spaced further apart than the jaws shown in Figure 12a.

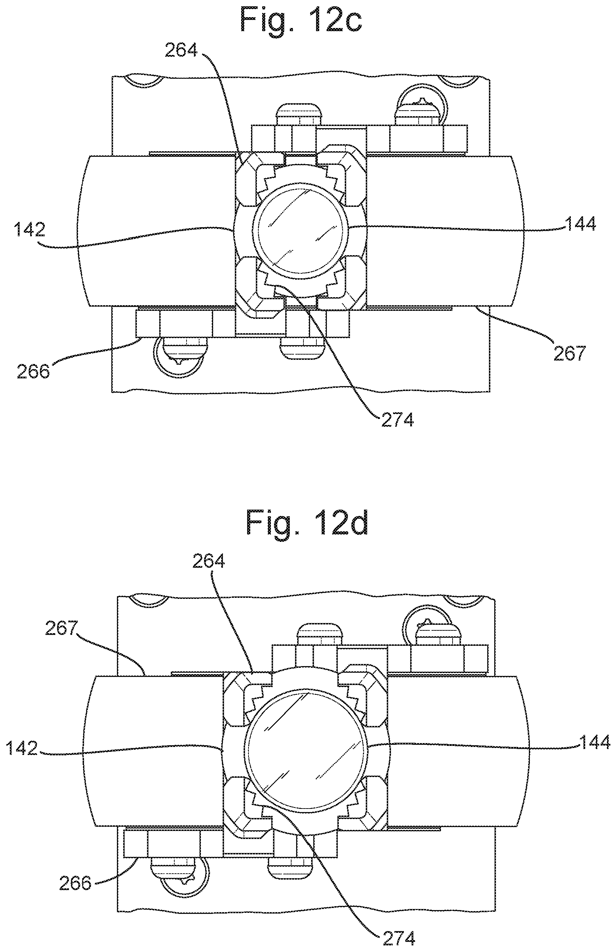

Turning to Figures 12c and 12d, these each show a corresponding arrangement to the arrangements shown in Figures 11c and 11d respectively. Accordingly, Figures 12c and 12d show how receptacles 144 of different sizes are held by the splines 274 of a tooth 264 of the jaws 262.

In Figures 12c and 12d, the different size of receptacles 144 being held by the jaws 262 causes the engagement between the splines 274 and the respective receptacle to differ. For the smaller receptacle, shown in Figure 12c, it can be seen there are four splines engaged with the receptacle, one spline per jaw tooth 264. As in Figure 11c, in Figure 12c, this is due to the size of the receptacle relative to the size of the nominal pitch circle of which the splines of each tooth form part. For the larger receptacle, shown in Figure 12d, even though this is a larger diameter than the receptacle of Figure 12c, since this is still relatively small compared to the diameter of the nominal pitch circle of the splines, the receptacle with the larger diameter is also engaged with four splines, one spline per jaw tooth.

A second example set of gripper jaws 262' is shown in Figures 13 to 16. Whereas the first example gripper jaws 262 shown in Figures 7 to 12d are typically used for transporting a sample tube 14 and for removing the cap 142 of the sample tube, the second example gripper jaws 262' shown in Figures 13 to 16 are typically used only for transporting a sample tube. Common to the first example set of gripper jaws and the second set of gripper jaws however is the arrangement of teeth 264, 264' arranged around a nominal pitch circle and the jaws being moveable towards and away from each other, which provides the capability in each set of jaws for holding sample tubes of different sizes. This achieves a minimum of four contact points between the jaws and any sample tube being held, when a minimum of three contact points would be needed, which thereby increases the reliability of the engagement between the sample tube and jaws.

Figure 13 shows a radially inner side of a gripper jaw 262'. The jaw can be seen to have two teeth 264'.

The teeth 264' are elongate projections from a support plate 266'. The support plate provide a means of attaching each jaw to a gripper module. This is typically achieved by passing a bolt or screw through a bore provided in the support plate.

The two teeth 264' of each jaw are laterally separated. In combination with teeth on an opposing jaw 262' (as is the case with the first example gripper jaws 262), when placed at a particular separation the teeth form a pitch circle.

As is visible in Figure 13, and more clearly in Figures 15 and 16, the teeth 264' have a radially inner surface 282'. This surface is curved and has an equal radius of curvature to the radius of curvature of the pitch circle. This radius is about 10.50 mm.

The teeth 264' have a length of about 22.25 mm. At a distal end of the teeth from the support plate 266', on a radial inner surface 282' of the teeth there is a radially outwardly inclined taper 284'. This taper narrows the radial thickness of a respective tooth towards the tip 278' of the tooth, and extends over about a quarter of the length of each tooth. The function of this taper is to centre a sample tube cap 142 between the opposing pair of jaws 262' when the jaws are lowered over a cap.

As with the first example gripper jaws 262, as can be seen from Figure 14, the second example gripper jaws 262' have a radially inwardly inclined taper 276' on an outer radial surface of each tooth 264'. This provides the same functionality as the corresponding feature of the first example gripper jaws and narrows the radial thickness of the tooth (further) towards the tip 278' of each tooth. Like the radially outwardly inclined taper 284', the radially inwardly inclined taper extends over about a quarter of the length of each tooth.

Instead of stainless steel, the second example gripper jaws 262' are formed of 6082-T6 aluminium, and are again able to be manufactured by a CNC machine. Due to the use of aluminium and shorter length of teeth 264' the second example jaws have a weight of about 5 g per jaw.

While the first example gripper jaws 262 are able to engage the cap 142 or the receptacle 144 of a sample tube 14, due to the length of the teeth 264' of the second example jaws 262', these are typically only able to grip the cap of a sample tube. In terms of size of cap they are able to be grip, Figures 15 and 16 respectively show the circumference 286' of a maximum and minimum and minimum cap size able to be held by the second example jaws. Although the figures are not provided to scale, the size of each circumference relative to the size of the jaws is approximately correct.

In Figures 15 and 16, the underside of two second example jaws 262' are shown. These are arranged such that the teeth 264' of each jaw are at the end of the respective jaw proximal to the other jaw. This arrangement is how the second example jaws and the first example jaws 262 are positioned relative each other when arranges as a pair of opposing jaws.

In Figure 15, the circumference 286' representing a cap 142, represents a cap with a diameter of about 21.50 mm. It can be seen the circumference is in contact with a large portion of the curved radial inward surface 282' of each tooth 274'. This is due to the similarity in diameter of the cap and of the pitch circle defined by the teeth.

The diameter of the circumference 286' shown in Figure 15 is significantly larger than the corresponding circumference 286' shown in Figure 16. The circumference in Figure 16 represents a cap 142 with a diameter of about 16.40 mm. Instead of the large contact area between the circumference and radial inner surfaces 282' of the teeth 264' in Figure 15, in Figure 16, there are only four locations, each with a point contact where the circumference is in contact with the radial inner surfaces of the teeth.

## Claims

1. An apparatus (1) for extracting a biological sample from a sample container, the apparatus comprising:
a holder arranged in use to support a sample container (14a); and
an extractor moveable in use between a first position disengaged from the container when the container is supported by the holder and a second position engaged with the container when the container is supported by the holder, the extractor being arranged in use to obtain matter from the container when in the second position; wherein the apparatus is **characterised by** comprising:
an imager arranged in use to capture an image of the extractor at the first position when the extractor is moved from the second position to the first position and to identify, based on analysis of the captured image, when sample is present outside the container.

2. The apparatus according to claim 1, wherein the analysis of the captured image includes object detection, and wherein the object detection preferably includes contrast detection, the apparatus preferably further comprising a contrast surface facing the imager and located on an opposing side of the first position to the imager, the contrast surface being a uniform colour of a colour other than one or more of human respiratory mucus, transport buffer, the combination of human respiratory mucus and transport buffer, swab colour.

3. The apparatus according to claim 1 or claim 2, wherein, when in the second position, the extractor is arranged in use to obtain matter from the interior of the container when the container is supported by the holder, wherein the extractor preferably includes a collector (30), the collector being moveable in use between the first position and second position, the first position being a position outside the container when the container is supported by the holder and the second position being a position inside the container when the container is supported by the holder, and wherein the matter obtained from the container is at least a portion of a sample, the collector thereby being arranged in use to obtain at least a portion of the sample from the container when in the second position.

4. The apparatus according to claim 3, wherein the collector is moveable between the first position and a third position and is arranged in use to move to the third position after the at least a portion of the sample is obtained, the third position being laterally offset from the first position, the apparatus preferably further comprising a sample plate (18) locatable in use at the third position, the collector being arranged in use to dispense the obtained sample on to the sample plate when at the third position, wherein the collector preferably further comprises a removably attachable vessel, the collector being arranged in use to pass liquid into the vessel to obtain the at least a portion of the sample when in the second position.

5. The apparatus according to claim 4, wherein the collector is moveable between the third position and a fourth position, the collector being arranged in use to deposit the vessel at the fourth position.

6. The apparatus according to claim 4 or claim 5, wherein the collector is moveable between a selection position and the first position, the collector being arranged in use to attach to a vessel located at the selection position, and wherein the collector is preferably moveable between the fourth position and the selection position.

7. The apparatus according to claim 6, wherein the collector is moveable along a path between the first, third, fourth and selection positions, and, based on the relative locations of the said positions, at least portions of the path over which the collector is travelling from one of said positions to another of said positions are a self-avoiding walk, and wherein the first, third, fourth and selection positions are preferably laterally offset relative to each other.

8. The apparatus according to any one of the preceding claims, wherein, when in the second position, the extractor is further arranged in use to obtain a cap (142) from the container when the container is supported by the holder, the matter obtained from the container thereby including the cap of the container, and the imager is arranged in use to identify, based on analysis of the captured image, when sample is present outside the container when the cap has been obtained from the container by the extractor, and wherein, when in the second position, the extractor is preferably arranged in use to engage the cap of the container when the container is supported by the holder.

9. The apparatus according to any one of the preceding claims, wherein the extractor includes a first gripper (26) and the matter obtained from the container includes a cap of the container, the first position being a position in which there is a separation between the first gripper and the container when the container is supported by the holder and the second position being a position in which the first gripper is clamped to the cap of the container when the container is supported by the holder, wherein preferably the first gripper being able to be clamped to the cap by being arranged in use to grip the cap of the container, and wherein the holder is arranged in use to maintain the orientation of the container when supported by the holder and the first gripper being rotatable in use, the first gripper thereby being arranged in use to remove the cap, the matter obtained in use from the container thereby including the cap, wherein the imager is preferably arranged in use to capture an image of the container and cap when the cap has been removed from the container and to identify, based on analysis of the captured image, when sample is present outside of the container, and wherein the first gripper is preferably arranged in use to replace the cap on the container after the sample has been obtained from the container by the collector.

10. The apparatus according to any one of the preceding claims, wherein the holder is arranged in use to support a plurality of containers, wherein the holder is preferably arranged in use to only support a single container at any one time, wherein the holder is preferably arranged in use to release each container after the sample has been obtained from the container, each container being moveable between the holder and a tube rack on release from the holder, preferably further comprising a second gripper arranged in use to hold a container and to be moveable between the tube rack and the holder, wherein the gripper preferably has a pair of jaws (262), at least one of the jaws being moveable towards and away the other jaw, the pair of jaws having at least three teeth (264) with each jaw having at least one of the at least three teeth, the teeth being positioned so as to form a pitch circle at a first separation of the jaws, wherein the teeth preferably each have a taper on a radially outer side of each of the teeth tapering at a tip of the each of the teeth tapering the tip radially inwardly, and/or wherein the teeth of each jaw preferably each have a first portion and a second portion, a radially inner side of each first portion being radially inward of the respective second portion, each first portion being located at a tip of the respective jaw and being arranged in use to contact the container when the second gripper is in use.

11. The apparatus according to claim 10, wherein, when the apparatus further comprises the second gripper with the pair of jaws, each jaw having at least one of the at least three teeth, the teeth each having the first portion and the second portion, the radially inner side of each first portion being radially inward of the respective second portion, each first portion being located at the tip of the respective jaw and being arranged in use to contact the container when the second gripper is in use, there is a taper between each first and respective second portion providing an inclined transition between the radial positions of the respective portions, and wherein a surface on which the tube rack is located is preferably tilted, wherein the tilt is preferably 2.3 degrees relative to horizontal.

12. The apparatus according to any one of the preceding claims, further comprising a further imager arranged in use, based on orientation and positioning of the further imager, to capture a further image of a deck (10) of the apparatus, and to identify, based on analysis of the further captured image, whether consumables on the deck are located in an expected position.

13. A method of identifying contamination risk in biological sample processing using the apparatus of any previous claim, the method comprising:
obtaining matter from a sample container (14a) with an extractor; the method **characterised by** comprising:
capturing an image of the extractor following matter being obtained; and
identify whether sample is present on the outside of the extractor by analysing content of the captured image.

14. The method according to claim 13, further comprising issuing an alert when sample is identified as being present outside the container, and wherein obtaining matter from the sample container with the extractor preferably comprises obtaining the sample from the sample container with a collector (30), and further comprising, in the absence of sample outside the container, the sample is dispensed on to a sample plate (18), wherein the sample is preferably obtained with the collector using a vessel removably attached to the collector, the sample being passed into the vessel by the collector to obtain the sample, the method further comprising depositing the used vessel at a waste position after the sample is dispensed on to the sample plate the method preferably further comprising attaching a clean vessel to the collector at a vessel store before obtaining the sample from a container.

15. The method according to claim 13 or claim 14, wherein obtaining matter from the sample container with the extractor further comprises:
removing a cap from the container before obtaining the sample from the container, the cap being removed by a rotatable gripper (26) engaged with the cap, the container being supported in a fixed position by a holder;
capturing an image of the container and cap; and
identifying whether sample is present outside the container and of the cap by analysing content of the captured image; the method preferably further comprising:
issuing an alert when sample is identified as being present outside the container;
replacing the cap on the container, with the gripper, after the sample is obtained from the container;
transferring, with the gripper, the container to a tube rack (12) after the cap is replaced; and
transferring, with the gripper, the container to the holder from the tube rack before the cap is removed.

## Patentansprüche

1. Einrichtung (1) zum Extrahieren einer biologischen Probe aus einem Probenbehälter, die Einrichtung umfassend:
einen Halter, der im Gebrauch dazu angeordnet ist, einen Probenbehälter (14a) zu stützen; und
einen Extraktor, der im Gebrauch zwischen einer ersten Position, außer Eingriff mit dem Probenbehälter, wenn der Probenbehälter durch den Halter gestützt wird, und einer zweiten Position, im Eingriff mit dem Probenbehälter, wenn der Probenbehälter durch den Halter gestützt wird, beweglich ist, wobei der Extraktor im Gebrauch dazu angeordnet ist, Material aus dem Probenbehälter zu gewinnen, wenn er sich in der zweiten Position befindet; wobei die Einrichtung **dadurch gekennzeichnet** ist, umfassend:
eine Bildaufnahmeeinheit, die im Gebrauch dazu angeordnet ist, ein Bild des Extraktors an der ersten Position aufzunehmen, wenn der Extraktor von der zweiten Position zur ersten Position bewegt wird, und, basierend auf Analyse des aufgenommenen Bildes, zu identifizieren, wann Probe außerhalb des Probenbehälters vorhanden ist.

2. Einrichtung nach Anspruch 1, wobei die Analyse des aufgenommenen Bildes Objekterkennung einschließt, und wobei die Objekterkennung bevorzugt Kontrasterkennung einschließt, die Einrichtung bevorzugt weiter eine der Bildaufnahmeeinheit zugewandte Kontrastfläche umfasst, die auf einer der Bildaufnahmeeinheit gegenüberliegenden Seite der ersten Position angeordnet ist, wobei die Kontrastfläche eine einheitliche Farbe einer Farbe ist, die verschieden ist von einem oder mehreren von menschlichem Atemwegsschleim, Transportpuffer, der Kombination aus menschlichem Atemwegsschleim und Transportpuffer, Tupferfarbe.

3. Einrichtung nach Anspruch 1 oder Anspruch 2, wobei der Extraktor, wenn er sich in der zweiten Position befindet, im Gebrauch dazu angeordnet ist, Material aus dem Inneren des Probenbehälters zu gewinnen, wenn der Probenbehälter durch den Halter gestützt wird, wobei der Extraktor bevorzugt einen Kollektor (30) einschließt, wobei der Kollektor im Gebrauch zwischen der ersten Position und der zweiten Position beweglich ist, die erste Position eine Position außerhalb des Probenbehälters ist wenn der Probenbehälter durch den Halter gestützt wird und die zweite Position eine Position innerhalb des Probenbehälters ist wenn der Probenbehälter durch den Halter gestützt wird, und wobei das aus dem Probenbehälter gewonnene Material mindestens ein Teil einer Probe ist, der Kollektor dadurch im Gebrauch dazu angeordnet ist, mindestens einen Teil der Probe aus dem Probenbehälter zu gewinnen, wenn er sich in der zweiten Position befindet.

4. Einrichtung nach Anspruch 3, wobei der Kollektor zwischen der ersten Position und einer dritten Position beweglich ist und im Gebrauch dazu angeordnet ist, sich zu der dritten Position zu bewegen, nachdem der mindestens eine Teil der Probe gewonnen worden ist, wobei die dritte Position seitlich versetzt zur ersten Position ist, wobei die Einrichtung bevorzugt weiter eine Probenplatte (18) umfasst, die im Gebrauch an der dritten Position anordbar ist, wobei der Kollektor im Gebrauch angeordnet ist, die gewonnene Probe auf die Probenplatte abzugeben, wenn er sich an der dritten Position befindet, wobei der Kollektor bevorzugt weiter ein lösbar anbringbares Gefäß umfasst, wobei der Kollektor im Gebrauch dazu angeordnet ist, Flüssigkeit in das Gefäß zu leiten, um den mindestens einen Teil der Probe zu gewinnen, wenn er sich in der zweiten Position befindet.

5. Einrichtung nach Anspruch 4, wobei der Kollektor zwischen der dritten Position und einer vierten Position beweglich ist, wobei der Kollektor im Gebrauch dazu angeordnet ist, das Gefäß an der vierten Position abzulegen.

6. Einrichtung nach Anspruch 4 oder Anspruch 5, wobei der Kollektor zwischen einer Auswahlposition und der ersten Position beweglich ist, wobei der Kollektor im Gebrauch dazu angeordnet ist, sich an einem an der Auswahlposition befindlichen Gefäß anzubringen, und wobei der Kollektor bevorzugt zwischen der vierten Position und der Auswahlposition beweglich ist.

7. Einrichtung nach Anspruch 6, wobei der Kollektor entlang eines Weges zwischen der ersten, dritten, vierten und Auswahlposition beweglich ist, und, basierend auf den relativen Lagen der genannten Positionen, mindestens Teile des Weges, über den der Kollektor von einer der genannten Positionen zu einer anderen der genannten Positionen bewegt wird, einen selbstvermeidenden Weg bilden, und wobei die erste, dritte, vierte und Auswahlposition bevorzugt seitlich versetzt zueinander sind.

8. Einrichtung nach einem der vorstehenden Ansprüche, wobei der Extraktor, wenn er sich in der zweiten Position befindet, weiter im Gebrauch dazu angeordnet ist, eine Verschlusskappe (142) von dem Probenbehälter zu gewinnen, wenn der Probenbehälter durch den Halter gestützt wird, das aus dem Probenbehälter gewonnene Material dadurch die Verschlusskappe des Probenbehälters einschließend, und die Bildaufnahmeeinheit ist im Gebrauch dazu angeordnet, zu identifizieren, auf der Grundlage der Analyse des aufgenommenen Bildes, wann Probe außerhalb des Probenbehälters vorhanden ist, wenn die Verschlusskappe von dem Probenbehälter durch den Extraktor gewonnen worden ist, und wobei der Extraktor, wenn er sich in der zweiten Position befindet, bevorzugt im Gebrauch dazu angeordnet ist, die Verschlusskappe des Probenbehälters in Eingriff zu bringen, wenn der Probenbehälter durch den Halter gestützt wird.

9. Einrichtung nach einem der vorstehenden Ansprüche, wobei der Extraktor einen ersten Greifer (26) einschließt und wobei das aus dem Probenbehälter gewonnene Material eine Verschlusskappe des Probenbehälters einschließt, die erste Position eine Position ist, in der eine Trennung zwischen dem ersten Greifer und dem Probenbehälter besteht wenn der Probenbehälter durch den Halter gestützt wird und die zweite Position eine Position ist, in der der erste Greifer an die Verschlusskappe des Probenbehälters geklemmt ist wenn der Probenbehälter durch den Halter gestützt wird, wobei bevorzugt der erste Greifer dadurch an die Verschlusskappe geklemmt werden kann, dass er im Gebrauch dazu angeordnet ist, die Verschlusskappe des Probenbehälters zu greifen, und wobei der Halter im Gebrauch dazu angeordnet ist, die Orientierung des Probenbehälters beizubehalten, wenn der Probenbehälter durch den Halter gestützt wird, und wobei der erste Greifer im Gebrauch drehbar ist, der erste Greifer dadurch im Gebrauch dazu angeordnet ist, die Verschlusskappe zu entfernen, das im Gebrauch aus dem Probenbehälter gewonnene Material dadurch die Verschlusskappe einschließt, wobei die Bildaufnahmeeinheit bevorzugt im Gebrauch dazu angeordnet ist, ein Bild des Probenbehälters und der Verschlusskappe aufzunehmen, wenn die Verschlusskappe von dem Probenbehälter entfernt worden ist, und, basierend auf Analyse des aufgenommenen Bildes, zu identifizieren, wann Probe außerhalb des Probenbehälters vorhanden ist, und wobei der erste Greifer bevorzugt im Gebrauch angeordnet ist, die Verschlusskappe nach dem Gewinnen der Probe aus dem Probenbehälter durch den Kollektor wieder auf den Probenbehälter aufzusetzen.

10. Einrichtung nach einem der vorstehenden Ansprüche, wobei der Halter im Gebrauch angeordnet ist eine Vielzahl von Probenbehältern zu stützen, wobei der Halter bevorzugt im Gebrauch angeordnet ist zu jedem Zeitpunkt nur einen einzelnen Probenbehälter zu stützen, wobei der Halter bevorzugt im Gebrauch dazu angeordnet ist, jeden Probenbehälter freizugeben, nachdem Probe aus dem Probenbehälter gewonnen worden ist, wobei jeder Probenbehälter bei Freigabe aus dem Halter zwischen dem Halter und einem Röhrchenrack beweglich ist, wobei die Einrichtung bevorzugt weiter einen zweiten Greifer umfasst, der im Gebrauch dazu angeordnet ist, einen Probenbehälter zu halten und zwischen dem Röhrchenrack und dem Halter beweglich zu sein, wobei der Greifer bevorzugt ein Paar Greifbacken (262) aufweist, wobei mindestens eine der Greifbacken auf die andere Greifbacke zu und von der anderen Greifbacke weg beweglich ist, wobei das Paar Greifbacken mindestens drei Zähne (264) aufweist, wobei jede Greifbacke mindestens einen der mindestens drei Zähne aufweist, wobei die Zähne so positioniert sind, dass sie bei einem ersten Abstand der Greifbacken einen Teilkreis bilden, wobei die Zähne bevorzugt jeweils eine Verjüngung an einer radial äußeren Seite jedes der Zähne aufweisen, wobei sich jeder der Zähne an einer Spitze jedes der Zähne verjüngt, wobei sich die Spitze radial innen verjüngt, und/oder wobei die Zähne jeder Greifbacke bevorzugt jeweils einen ersten Teil und einen zweiten Teil aufweisen, wobei eine radial innere Seite jedes ersten Teils radial innen des jeweiligen zweiten Teils ist, wobei jeder erste Teil an einer Spitze der jeweiligen Greifbacke angeordnet ist und im Gebrauch dazu angeordnet ist, den Probenbehälter zu kontaktieren, wenn der zweite Greifer im Gebrauch ist.

11. Einrichtung nach Anspruch 10, wobei, wenn die Einrichtung weiter den zweiten Greifer mit dem Paar Greifbacken umfasst, jede Greifbacke mindestens einen der mindestens drei Zähne aufweisend, die Zähne jeweils den ersten Teil und den zweiten Teil aufweisend, die radial innere Seite jedes ersten Teils radial innen des jeweiligen zweiten Teils, jeder erste Teil an der Spitze der jeweiligen Greifbacke angeordnet und im Gebrauch angeordnet den Probenbehälter zu kontaktieren wenn der zweite Greifer im Gebrauch ist, es eine Verjüngung zwischen jedem ersten und dem jeweiligen zweiten Teil gibt die einen geneigten Übergang zwischen den radialen Positionen der jeweiligen Teile bereitstellt, und wobei eine Fläche auf der das Röhrchenrack angeordnet ist bevorzugt geneigt ist, wobei die Neigung bevorzugt 2,3 Grad relativ zur Horizontalen beträgt.

12. Einrichtung nach einem der vorstehenden Ansprüche, die weiter eine weitere Bildaufnahmeeinheit umfasst, die, basierend auf Orientierung und Positionierung der weiteren Bildaufnahmeeinheit, im Gebrauch dazu angeordnet ist, ein weiteres Bild eines Decks (10) der Einrichtung aufzunehmen, und zu identifizieren, basierend auf Analyse des weiteren aufgenommenen Bildes, ob Verbrauchsmaterialien auf dem Deck an einer erwarteten Position angeordnet sind.

13. Verfahren zum Identifizieren eines Kontaminationsrisikos bei der Verarbeitung biologischer Proben unter Verwendung der Einrichtung nach einem vorstehenden Anspruch, das Verfahren umfassend:
Gewinnen von Material aus einem Probenbehälter (14a) mit einem Extraktor; das Verfahren **dadurch gekennzeichnet**, umfassend:
Aufnehmen eines Bildes des Extraktors nach dem Gewinnen von Material; und
Identifizieren, ob Probe an der Außenseite des Extraktors vorhanden ist durch Analysieren des Inhalts des aufgenommenen Bildes.

14. Verfahren nach Anspruch 13, wobei das Verfahren weiter das Ausgeben einer Warnmeldung umfasst, wenn Probe als außerhalb des Probenbehälters vorhanden identifiziert wird, und wobei das Gewinnen von Material aus dem Probenbehälter mit dem Extraktor bevorzugt das Gewinnen der Probe aus dem Probenbehälter mit einem Kollektor (30) umfasst, und wobei das Verfahren weiter umfasst, in Abwesenheit von Probe außerhalb des Probenbehälters, dass die Probe auf eine Probenplatte (18) abgegeben wird, wobei die Probe bevorzugt mit dem Kollektor unter Verwendung eines lösbar an dem Kollektor angebrachten Gefäßes gewonnen wird, wobei die Probe durch den Kollektor in das Gefäß geleitet wird, um die Probe zu gewinnen, wobei das Verfahren weiter umfasst, das Ablegen des verwendeten Gefäßes an einer Abfallposition, nachdem die Probe auf die Probenplatte abgegeben worden ist, wobei das Verfahren bevorzugt weiter umfasst, das Anbringen eines sauberen Gefäßes an dem Kollektor an einem Gefäßmagazin, bevor die Probe aus einem Probenbehälter gewonnen wird.

15. Verfahren nach Anspruch 13 oder Anspruch 14, wobei das Gewinnen von Material aus dem Probenbehälter mit dem Extraktor weiter umfasst:
Entfernen einer Verschlusskappe von dem Probenbehälter bevor die Probe aus dem Probenbehälter gewonnen wird, die Verschlusskappe durch einen drehbaren Greifer (26) im Eingriff mit der Verschlusskappe entfernt wird, der Probenbehälter durch einen Halter in einer festen Position gestützt wird;
Aufnehmen eines Bildes des Probenbehälters und der Verschlusskappe; und
Identifizieren ob Probe außerhalb des Probenbehälters und der Verschlusskappe vorhanden ist durch Analysieren des Inhalts des aufgenommenen Bildes; das Verfahren bevorzugt weiter umfasst:
Ausgeben einer Warnmeldung wenn Probe als außerhalb des Probenbehälters vorhanden identifiziert wird;
Wiederaufsetzen der Verschlusskappe auf den Probenbehälter, mit dem Greifer, nachdem die Probe aus dem Probenbehälter gewonnen worden ist;
Überführen, mit dem Greifer, des Probenbehälters zu einem Röhrchenrack (12), nachdem die Verschlusskappe wiederaufgesetzt worden ist; und
Überführen, mit dem Greifer, des Probenbehälters zu dem Halter von dem Röhrchenrack, bevor die Verschlusskappe entfernt wird.

## Revendications

1. Appareil (1) destiné à extraire un échantillon biologique d'un récipient d'échantillons, l'appareil comprenant :
un support conçu en utilisation pour supporter un récipient (14a) d'échantillons ; et
un extracteur mobile en utilisation entre une première position désolidarisé du récipient lorsque le récipient est supporté par le support et une deuxième position en prise avec le récipient lorsque le récipient est supporté par le support, l'extracteur étant conçu en utilisation pour obtenir de la matière du récipient lorsqu'il est dans la deuxième position ; dans lequel l'appareil est **caractérisé en ce qu'**il comprend :
un imageur conçu en utilisation pour capturer une image de l'extracteur à la première position lorsque l'extracteur est déplacé de la deuxième position à la première position et pour identifier, sur la base de l'analyse de l'image capturée, le moment où l'échantillon est présent à l'extérieur du récipient.

2. Appareil selon la revendication 1, dans lequel l'analyse de l'image capturée inclut la détection d'objets, et dans lequel la détection d'objets inclut préférablement la détection de contraste, l'appareil comprenant en outre préférablement une surface de contraste faisant face à l'imageur et située sur un côté de la première position opposé à l'imageur, la surface de contraste étant d'une couleur uniforme d'une couleur autre qu'un ou plusieurs parmi le mucus respiratoire humain, le tampon de transport, la combinaison de mucus respiratoire humain et de tampon de transport, la couleur de l'écouvillon.

3. Appareil selon la revendication 1 ou la revendication 2, dans lequel, lorsqu'il est dans la deuxième position, l'extracteur est conçu en utilisation pour obtenir de la matière depuis la partie intérieure du récipient lorsque le récipient est supporté par le support, dans lequel l'extracteur inclut préférablement un collecteur (30), le collecteur étant mobile en utilisation entre la première position et la deuxième position, la première position étant une position à l'extérieur du récipient lorsque le récipient est supporté par le support et la deuxième position étant une position à l'intérieur du récipient lorsque le récipient est supporté par le support, et dans lequel la matière obtenue du récipient est au moins une portion d'un échantillon, le collecteur étant ainsi conçu en utilisation pour obtenir au moins une portion de l'échantillon du récipient lorsqu'il est dans la deuxième position.

4. Appareil selon la revendication 3, dans lequel le collecteur est mobile entre la première position et une troisième position et est conçu en utilisation pour se déplacer jusqu'à la troisième position après l'obtention de la au moins une portion de l'échantillon, la troisième position étant latéralement décalée par rapport à la première position, l'appareil comprenant en outre préférablement une plaque (18) d'échantillons pouvant être localisée en utilisation à la troisième position, le collecteur étant conçu en utilisation pour distribuer l'échantillon obtenu sur la plaque d'échantillons lorsqu'il est à la troisième position, dans lequel le collecteur comprend en outre préférablement un contenant pouvant être fixé de manière amovible, le collecteur étant conçu en utilisation pour faire passer un liquide dans le contenant afin d'obtenir la au moins une portion de l'échantillon lorsqu'il est dans la deuxième position.

5. Appareil selon la revendication 4, dans lequel le collecteur est mobile entre la troisième position et une quatrième position, le collecteur étant conçu en utilisation pour déposer le contenant à la quatrième position.

6. Appareil selon la revendication 4 ou la revendication 5, dans lequel le collecteur est mobile entre une position de sélection et la première position, le collecteur étant conçu en utilisation pour être fixé à un contenant situé à la position de sélection, et dans lequel le collecteur est mobile préférablement entre la quatrième position et la position de sélection.

7. Appareil selon la revendication 6, dans lequel le collecteur est mobile le long d'un trajet entre les première, troisième, quatrième positions et la position de sélection, et, sur la base des emplacements relatifs desdites positions, au moins des portions du trajet sur lequel le collecteur se déplace depuis l'une desdites positions vers une autre desdites positions constituent une marche auto-évitante, et dans lequel les première, troisième, quatrième positions et la position de sélection sont préférablement décalées latéralement les unes par rapport aux autres.

8. Appareil selon l'une quelconque des revendications précédentes, dans lequel, lorsqu'il est dans la deuxième position, l'extracteur est en outre conçu en utilisation pour obtenir un bouchon (142) du récipient lorsque le récipient est supporté par le support, la matière obtenue du récipient incluant ainsi le bouchon du récipient, et l'imageur est conçu en utilisation pour identifier, sur la base de l'analyse de l'image capturée, le moment où l'échantillon est présent à l'extérieur du récipient lorsque le bouchon a été obtenu du récipient par l'extracteur, et dans lequel, lorsqu'il est dans la deuxième position, l'extracteur est conçu préférablement en utilisation pour venir en prise avec le bouchon du récipient lorsque le récipient est supporté par le support.

9. Appareil selon l'une quelconque des revendications précédentes, dans lequel l'extracteur inclut un premier dispositif de préhension (26) et la matière obtenue du récipient inclut un bouchon du récipient, la première position étant une position dans laquelle il y a une séparation entre le premier dispositif de préhension et le récipient lorsque le récipient est supporté par le support et la deuxième position étant une position dans laquelle le premier dispositif de préhension est serré sur le bouchon du récipient lorsque le récipient est supporté par le support, dans lequel préférablement le premier dispositif de préhension peut être serré sur le bouchon en étant conçu en utilisation pour saisir le bouchon du récipient, et dans lequel le support est conçu en utilisation pour maintenir l'orientation du récipient lorsqu'il est supporté par le support et le premier dispositif de préhension peut tourner en utilisation, le premier dispositif de préhension étant ainsi conçu en utilisation pour retirer le bouchon, la matière obtenue en utilisation du récipient incluant ainsi le bouchon, dans lequel l'imageur est préférablement conçu en utilisation pour capturer une image du récipient et du bouchon lorsque le bouchon a été retiré du récipient et pour identifier, sur la base de l'analyse de l'image capturée, le moment où l'échantillon est présent à l'extérieur du récipient, et dans lequel le premier dispositif de préhension préférablement est conçu préférablement en utilisation pour replacer le bouchon sur le récipient après l'obtention de l'échantillon du récipient par le collecteur.

10. Appareil selon l'une quelconque des revendications précédentes, dans lequel le support est conçu en utilisation pour supporter une pluralité de récipients, dans lequel le support est conçu préférablement en utilisation pour ne supporter qu'un seul récipient à un moment quelconque, dans lequel le support est conçu préférablement en utilisation pour libérer chaque récipient après que l'échantillon a été obtenu du récipient, chaque récipient étant mobile entre le support et un porte-tubes lorsqu'il est libéré du support, comprenant en outre préférablement un second dispositif de préhension conçu en utilisation pour maintenir un récipient et pour être mobile entre le porte-tubes et le support, dans lequel le dispositif de préhension présente préférablement une paire de mâchoires (262), au moins une des mâchoires étant mobile vers l'autre mâchoire et loin de cette dernière, la paire de mâchoires présentant au moins trois dents (264), chaque mâchoire présentant au moins l'une des au moins trois dents, les dents étant positionnées de manière à former un cercle primitif au niveau d'une première séparation des mâchoires, dans lequel les dents présentent chacune préférablement un resserrement sur un côté radialement externe de chacune des dents se resserrant au niveau d'une pointe de chacune des dents resserrant la pointe radialement vers l'intérieur, et/ou dans lequel les dents de chaque mâchoire présentent chacune préférablement une première portion et une seconde portion, un côté radialement interne de chaque première portion étant radialement vers l'intérieur de la seconde portion respective, chaque première portion étant située au niveau d'une pointe de la mâchoire respective et étant conçue en utilisation pour être en contact avec le récipient lorsque le second dispositif de préhension est en cours d'utilisation.

11. Appareil selon la revendication 10, dans lequel, lorsque l'appareil comprend en outre le second dispositif de préhension avec la paire de mâchoires, chaque mâchoire présentant au moins l'une des au moins trois dents, les dents présentant chacune la première portion et la seconde portion, le côté radialement interne de chaque première portion étant radialement vers l'intérieur de la seconde portion respective, chaque première portion étant située au niveau de la pointe de la mâchoire respective et étant conçue en utilisation pour être en contact avec le récipient lorsque le second dispositif de préhension est en cours d'utilisation, il y a un resserrement entre chaque première portion et chaque seconde portion respective fournissant une transition inclinée entre les positions radiales des portions respectives, et dans lequel une surface sur laquelle est situé le porte-tubes est préférablement inclinée, dans lequel l'inclinaison est préférablement de 2,3 degrés par rapport à l'horizontale.

12. Appareil selon l'une quelconque des revendications précédentes, comprenant en outre un imageur supplémentaire conçu en utilisation, sur la base de l'orientation et du positionnement de l'imageur supplémentaire, pour capturer une image supplémentaire d'un plateau (10) de l'appareil, et pour identifier, sur la base de l'analyse de l'image capturée supplémentaire, si des consommables sur le plateau se trouvent dans une position attendue.

13. Procédé d'identification d'un risque de contamination dans le traitement d'échantillons biologiques en utilisant l'appareil selon une quelconque revendication précédente, le procédé comprenant :
l'obtention de matière d'un récipient (14a) d'échantillons à l'aide d'un extracteur ; le procédé étant **caractérisé en ce qu'**il comprend :
la capture d'une image de l'extracteur à la suite de l'obtention de la matière ; et
le fait d'identifier si l'échantillon est présent sur l'extérieur de l'extracteur en analysant le contenu de l'image capturée.

14. Procédé selon la revendication 13, comprenant en outre l'émission d'une alerte lorsque l'échantillon est identifié comme étant présent à l'extérieur du récipient, et dans lequel l'obtention de matière du récipient d'échantillons à l'aide de l'extracteur comprend préférablement l'obtention de l'échantillon du récipient d'échantillons à l'aide d'un collecteur (30), et comprenant en outre, en l'absence d'échantillon à l'extérieur du récipient, l'échantillon est distribué sur une plaque (18) d'échantillons, dans lequel l'échantillon est obtenu préférablement avec le collecteur en utilisant un contenant fixé de manière amovible au collecteur, l'échantillon étant passé dans le contenant par le collecteur afin d'obtenir l'échantillon, le procédé comprenant en outre le dépôt du contenant utilisé à une position de rebut après que l'échantillon a été distribué sur la plaque d'échantillons ; le procédé comprenant en outre préférablement la fixation d'un contenant propre au collecteur au niveau d'une réserve de contenants avant l'obtention de l'échantillon depuis un récipient.

15. Procédé selon la revendication 13 ou la revendication 14, dans lequel l'obtention de matière depuis le récipient d'échantillons à l'aide de l'extracteur comprend en outre :
le retrait d'un bouchon du récipient avant l'obtention de l'échantillon du récipient, le bouchon étant retiré par un dispositif de préhension rotatif (26) en prise avec le bouchon, le récipient étant supporté dans une position fixe par un support ;
la capture d'une image du récipient et du bouchon ; et
le fait d'identifier si l'échantillon est présent à l'extérieur du récipient et du bouchon en analysant le contenu de l'image capturée ; le procédé comprenant en outre préférablement :
l'émission d'une alerte lorsque l'échantillon est identifié comme étant présent à l'extérieur du récipient ;
le replacement du bouchon sur le récipient, à l'aide du dispositif de préhension, après que l'échantillon a été obtenu du récipient ;
le transfert, à l'aide du dispositif de préhension, du récipient vers un porte-tubes (12) après le replacement du bouchon ; et
le transfert, à l'aide du dispositif de préhension, du récipient vers le support depuis le porte-tubes avant le retrait du bouchon.
